(19) Europäisches Patentamt

European Patent Office

Office européen des brevets

(11) **EP 0 632 379 B1**

(12) **EUROPEAN PATENT SPECIFICATION**

(45) Date of publication and mention
of the grant of the patent:
**18.08.2004   Bulletin 2004/34**

(51) Int Cl.⁷: **G06F 11/16**, G06F 11/20

(21) Application number: **94108649.8**

(22) Date of filing: **06.06.1994**

(54) **Fault tolerant storage controller utilizing tightly coupled dual controller modules**

Festgekoppelte Dual-Steuermodule benutzendes fehlertolerantes Speichersteuergerät

Contrôleur de mémoire tolérant les fautes utilisant des modules de contrôleurs doubles couplés de manière rigide

(84) Designated Contracting States:
**DE FR GB IT**

(30) Priority:   **04.06.1993   US 71710**

(43) Date of publication of application:
**04.01.1995   Bulletin 1995/01**

(73) Proprietor: **Compaq Computer Corporation
Houston Texas 77070 (US)**

(72) Inventors:
  • **Sicola, Stephen J.**
    **Monument, Colorado 80132 (US)**
  • **Jackson, James P.**
    **Colorado Springs, Colorado 80918 (US)**
  • **Oakey, Roger L.**
    **Colorado Springs, Colorado 80908-3505 (US)**
  • **Brame, Richard G.**
    **Monument, Colorado 80132 (US)**
  • **Mclean, Ronald H.**
    **Elbert, Colorado 80106 (US)**
  • **Walker, Michael D.**
    **Colorado Springs, Colorado 80903 (US)**
  • **Fava, Thomas F.**
    **Colorado Springs, Colorado 80919 (US)**
  • **Adams, Thomas Gene**
    **Peyton, Colorado 80831 (US)**

(74) Representative: **Charig, Raymond Julian
    Eric Potter Clarkson,
    Park View House,
    58 The Ropewalk
    Nottingham NG1 5DD (GB)**

(56) References cited:
  **EP-A- 0 010 211          WO-A-91/13399**

  • **GRAY J ET AL: "PARITY STRIPING OF DISC ARRAYS: LOW-COST RELIABLE STORAGE WITH ACCEPTABLE THROUGHPUT" PROCEEDINGS OF THE INTERNATIONAL CONFERENCE ON VERY LARGE DATA BASES, XX, XX, 13 August 1990 (1990-08-13), pages 148-161, XP000522459**

**Description**

**BACKGROUND OF THE INVENTION:**

The present invention relates, in general, to the field of storage controllers for interfacing one or more host computers to one or more computer mass storage devices such as disk drives. More particularly, the present invention relates to a fault tolerant storage controller utilizing tightly coupled dual controller modules which provides essentially fail-safe controller initialization and failover in the event that one of the controller modules malfunctions.

Storage controllers are commonly utilized to off-load certain lower level processing functions relating to data storage and retrieval from a host computer and to serve as an interface between the host and the physical storage media, which in most normal operations, may be a number of disk drives coupled to one or more storage buses. The controller is, therefore, one of the most critical elements in the system input/output ("I/O") performance chain.

As a consequence, it is critical for continued system operation that the host computer(s) be able to continue to reliably read and write data from and to the storage media without interruption. Thus, to the extent possible, the storage controller must be fault tolerant. Moreover, balancing factors such as cost, performance and reliability, it is also important that the storage controller be user configurable, for example, as a redundant array of inexpensive disks ("RAID") controller.

One such fault tolerant system is described in WO 91/13399, in which a method and apparatus for controlling data flow between a computer and a group of memory devices arranged in a logical configuration is presented. It uses a pair of interconnected controller modules, comprising first and second level controllers. The first and second level controllers are connected by data buses for the transfer of data and status signals, while the second level controllers are connected to each other by a communication medium. The two level controllers and switching circuitry provide a fault tolerant architecture for the control of mass storage devices. Failure of a component in the system leads to an automatic swapping of the failed component processes to an associated normally operating component.

The use of a communication medium for the passing of error and status information between secondary controllers is known from EP 010 211, in which the secondary controllers are able to notify failure of a secondary controller by communicating an unavailability signal across the medium.

**SUMMARY OF THE INVENTION**

Disclosed herein is a fault tolerant storage controller utilizing tightly coupled dual controller modules. The controller modules of the fault tolerant storage controller check to see if another controller module, cache module or other auxiliary module is present electrically coupled and, if so, all configuration information with respect to the controller modules and their attached devices are shared between them. Configuration information, which may be entered into either or both of the controller modules, is shared dynamically. Each cache module of the fault tolerant storage controller may be "locked" by an individual controller module to prevent the other controller module from inadvertently disturbing the contents of the opposite controller module's cache.

During initialization, each controller module checks for the existence of an associated cache module and, if present, it is immediately locked by that controller module. Should an individual controller module fail or give an indication of a malfunction, the other controller module will disable or "kill" the malfunctioning controller module, thereby resetting and releasing any lock it may have had on its cache module. In those instances where the cache module is a write cache, the surviving controller module can resume operations where the malfunctioning controller module left off and complete any remaining writes to the disabled controller module's storage devices preventing the loss of any host computer data. The controller modules are also tolerant of the other controller module failing and then rebooting and the sequence of events is detected and recognized by the surviving controller module such that it does not disable the one that failed. The dual controller modules of the fault tolerant storage controller of the present invention communicate asynchronously to verify that they are each operational and to exchange and verify configuration information and any state changed with respect to attached devices dynamically. This invention in its broad form resides in a computer mass storage device controller system as recited in claim 1.

**BRIEF DESCRIPTION OF THE DRAWINGS**

A more detailed understanding of the invention may be had from the following description of a preferred embodiment, given way of example and to be read in conjunction with the accompanying drawing wherein:

Fig. 1 is a detailed logic block diagram of a storage controller module in accordance with the present invention;

Fig. 2 is an overview logic block diagram of a pair of tightly coupled storage controller modules as individually depicted in Fig. 1, illustrating each controller's respective cache module in a dual controller configuration and illustrating the inter-controller communication therebetween;

Fig. 3 is a simplified logic block diagram of the tightly coupled storage controller modules and respective cache modules of Fig. 2 further illustrating the coupling of the storage controller modules to a number of computer mass storage device buses;

Fig. 4 is a functional logic block diagram of the dynamic random access memory ("DRAM") controller and arbiter ("DRAB") integrated circuit chip of the storage controller and cache modules of Figs. 1 and 2;

Fig. 5 is a simplified logic diagram and register map of the FX chip of the storage controller module of Fig. 1;

Figs 6a and 6b are illustrations of the write diagnostic register 0 and write diagnostic register 1 of the storage controller module of Fig. 1; and

Figs. 7a and 7b are illustrations of the read diagnostic register 0 and read diagnostic register 1 of the storage controller module of Fig. 1.

## DESCRIPTION OF A PREFERRED EMBODIMENT

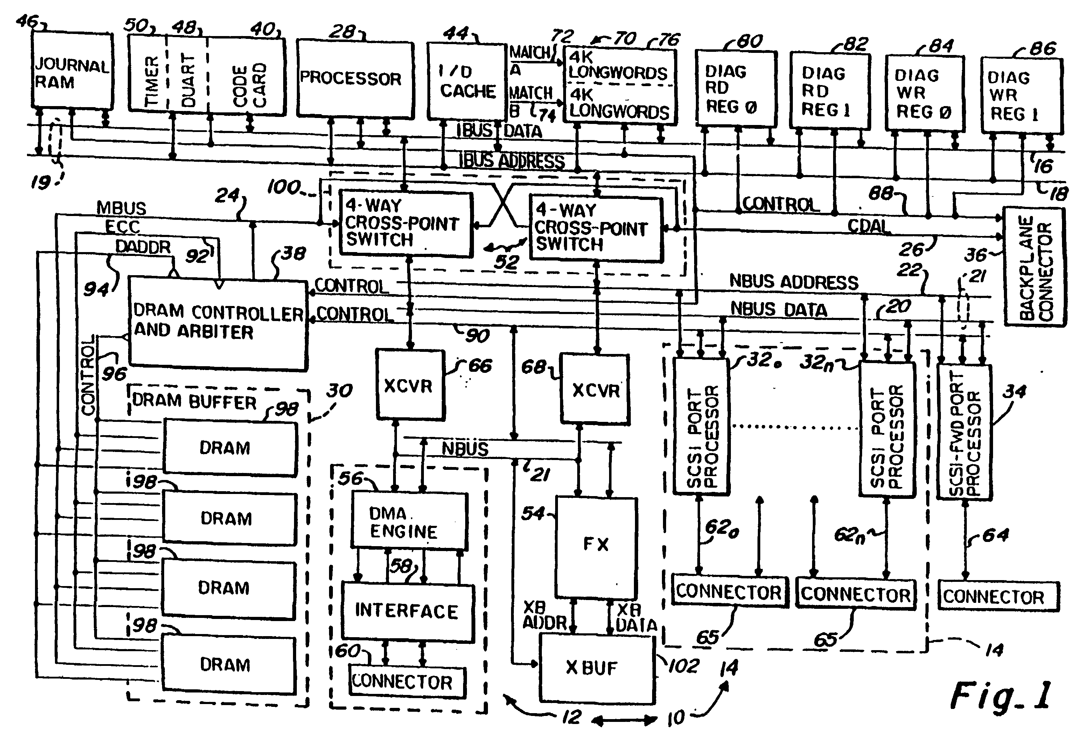

With reference to Fig. 1, a controller module 10 for use in the storage controller of the present invention is shown. Storage controller module 10 comprises a host-interface 12 and device ports 14. The controller module 10 further includes a number of data buses including IBUS data lines 16 and associated IBUS address lines 18 (collectively sometimes hereinafter referred to as "IBUS 19"). The designation IBUS 19 refers to the fact that this is the primary bus for interfacing with processor 28 of the controller module 10, the processor 28 in the embodiment shown being preferably an Intel 80960CA.

Similarly, the controller module 10 also includes NBUS data lines 20 and NBUS address lines 22 (hereinafter sometimes collectively referred to as "NBUS 21"). The designation NBUS 21 is utilized as a designation in light of the fact that the SCSI port processors $32_0$-$32_n$ and SCSI-FWD port processor 34 may be furnished as NCR53C710 and NCR53C720 SCSI port processors, respectively.

MBUS 24 (hereinafter sometimes referred to as memory data address lines "MDAL") is the primary bus associated with the controller module 10 DRAM buffer 30 memory. Additionally, the controller module 10 further includes a cache data address line ("CDAL") bus 26 primarily associated with the associated cache modules which will be more fully described hereinafter. As shown, IBUS 19 and CDAL bus 26 have with them an associated control bus 88 coupling DRAM controller and arbiter ("DRAB") 38 to any associated cache module (not shown) through backplane connector 36 as well as to a number of devices coupled to IBUS 19, including processor 28.

DRAB 38 provides an output on DRAM address line ("DADDR") lines 94 to the individual DRAM's 98 of the DRAM buffer 30. Similarly, DRAB 38 provides a control line input to the same DRAM's 98. Error correction code ("ECC") lines 92 input is supplied to DRAB 38 from DRAM buffer 30. An additional bi-directional NBUS control line 90 interconnects DRAB 38 with devices coupled to NBUS 21 as will be more fully described hereinafter.

Devices coupled to processor 28 by means of IBUS 19 and controlled by signals on control bus 88 include journal RAM 46, timer 50, dual universal asynchronous receiver transmitter ("DUART") 48 and code card 40. Additionally coupled to IBUS 19 and control bus 88 is I/D cache 44 which supplies a Match A output 72 and Match B output 74 to tag RAM's 70, comprising 4K longwords RAM 76 and 78 as shown.

Additionally, read diagnostic registers (0) 80 and (1) 82 as well write diagnostic registers (0) 84 and (1) 86 are also coupled to IBUS 19 as well as control bus 88.

MBUS 24 is coupled to CDAL bus 26 by means of a bus exchanger 100 comprising a pair of cross-coupled 4-way cross point switches 52. Host-interface 12, which comprises a host bus specific DMA engine 56, associated interface 58 and connector 60 is coupled to NBUS 21 as well as NBUS control lines 90 and NBUS data lines 20 by means of transceiver ("XCVR") 66 as shown. XCVR 68 couples FX chip 54 (which will be more fully described hereinafter) to NBUS address lines 22. FX chip 54 (sometimes hereinafter referred to as "FX RAID Chip") provides bi-directional coupling to XOR buffer ("XBUF") 102 through XB ADDR and XD DATA data lines. XBUF 102 is also coupled to NBUS 21.

Port processors $32_0$-$32_n$ and 34 are coupled to a number of storage device busses $62_0$-$62_n$ and host bus 64, respectively, through a number of connectors 65 as shown. Port processor 34 is a DMA engine for use with controller module 10 as a SCSI host similar to DMA engine 56 of host-interface 12.

The controller module 10 hardware consists of a core set of functionality coupled with different host interfaces 12 and one or more device ports 14 depending on specific implementations. As required therefore, host interface 12 may comprise DMA engines 56 and associated interfaces 58 which would allow controller module 10 to interface to the Computer Interconnect ("CI") and Digital Storage System Interconnect ("DSSI") busses available from Digital Equipment Corp., assignee of the present invention, as well as any variation of the small computer system interconnect ("SCSI") regardless of whether fast or wide or differential or FWD SCSI, and fiber distributed data interconnect ("FDDI") host busses. In the embodiment shown in Fig. 1, device ports 14 support the SCSI device busses in all its current implementations. Controller module 10 provides 1 through as many as 6 device ports on device busses $62_0$ - $62_N$

incorporated within device ports 14.

The controller module 10 contains 4 internal busses as previously described and 2 to 7 external busses depending on its configuration. The internal busses are the IBUS 19, the MBUS 24, the NBUS 21 and the CDAL bus 26. Of these four internal busses, the IBUS 19 is the native bus used by the policy processor 28. The MBUS 24 is the bus used to access the shared buffer memory of DRAM buffer 30 for the controller module 10. The NBUS 21 is the bus used for the port processors 32, 34. The IBUS 19, NBUS 21 and MBUS 24 are tied together via bus exchanger 100 and the entities on the busses communicate in one of two ways. They may communicate directly via the bus exchanger 100 and only the processor 28 uses this technique for writing or reading registers in entities on the NBUS 21. They may also communicate indirectly via the shared buffer memory of DRAM buffer 30 or the cache modules as will be more fully described hereinafter. This is achieved by either the processor 28 or the NBUS 21 entities writing or reading buffer memory or cache.

The CDAL bus 26 is the bus used to access the external cache modules (as will be more fully described hereinafter), from the main controller module 10. It may be accessed, if present, via the bus exchanger 100 as shown in Fig. 1.

The common aspects of the IBUS 19, NBUS 21, MBUS 24 and CDAL bus 26 are that they are 32-bit synchronous, with LONGWORD, word, and byte access, burst mode capability, 4 LONGWORD's maximum, and byte parity. The CDAL bus 26 and the MBUS bus 24 have multiplexed address and data while the IBUS 19 and NBUS 21 have separate address and data buses.

In the embodiment shown in Fig. 1, controller module 10 has a core consisting of an Intel 80960CA processor chip utilized as processor 28. The processor 28 may be a 25 MHz version that provides a consistent 25 millions of instructions per second ("MIPS") of processing power for the controller module 10. Processor 28 is utilized as the policy software processor controlling all but the low level device and host port operations. Code card 40 of the controller module 10 comprises a memory card control store which incorporates a PCMCIA standard program card with one megabyte of memory. Code card 40 holds the code for the controller module 10 and is used each time the module boots. The code card 40 contents are validated upon any boot and copied to the shared memory of DRAM buffer 30 for the controller module 10.

The shared memory DRAM of DRAM buffer 30 is the portion of the controller module which also comprises the DRAB 38 gate array. The shared memory is shared between the IBUS 19 and the NBUS 21 entities for data structures and/or data buffers. A portion of the shared memory is used during normal operation as a read cache in the absence of a cache module such as a read or write-back cache module option as will be more fully described hereinafter. With either of these options, the portion of shared memory normally used for read cache will be used to hold cache module context for cache lookups.

The I/D cache 44 is a 32 Kbyte static random access memory ("SRAM") cache used by the processor 28 to achieve faster access to instructions and variables during execution. This is required because of the shared memory between the IBUS 19 and NBUS 21. Although the processor 28 has an internal cache, it is not large enough to offset the performance degradation that the shared memory may cause. The shared memory subsystem, in conjunction with the I/D cache 44, represents a viable cost/performance compromise for controller module 10. Data coherency in the I/D cache 44 is maintained by using a "write-through" cache design.

The journal RAM 46 is a non-volatile ("NV") 32 Kbyte battery backed up SRAM used for two different functions within controller module 10. First, journal RAM 46 is used to store the parameter information entered by the user and by the controller module 10 software. Second, the journal RAM 46 will also be used by RAID software in the controller module 10 to cover the RAID "write hole" created by power fails during RAID operations. This latter aspect is necessary in the event a controller module 10 is performing RAID operations in the absence of a write-back cache or dual controller module's 10 having dual journal RAM 46. The on-board journal RAM 46 need not be used in controller configurations where there are dual controller modules 10 and either of the write-back cache or dual controller module 10 journal RAM 46 options are installed. However, if a read cache module alone is used, the on-board journal RAM 46 must be utilized in order to cover the RAID "write hole" previously described.

The DUART 48 for the controller module 10 also serves two purposes. In the first instance, one of the integrated UART's is used for the controller module 10 console terminal. This is utilized to enter configurations, show parameters, control the controller module 10 operations, or run diagnostics and system utilities. The second purpose is to use the integrated UART to provide a link between two controller modules 10 in a tightly coupled dual controller module configuration via the controller module 10 backplane. The UART link is used to share configuration information and to insure that both controller modules 10 are running properly for failover purposes. The timer 50 is utilized to provide controller module 10 software with a relatively accurate timing interval. It should be noted that, should one (for example) port processor 32 fail on a particular controller module 10, the other controller module 10 will take over the devices coupled to that particular port.

The bus exchanger 100, comprising a pair of four-way crosspoint switches 52 is a hardware block that allows all pieces of the controller module 10 to operate together. The bus exchanger 100 is basically a 2x2 crossbar that is very fast and provides access by all controller module 10 functionality to all parts of the controller module 10 hardware.

The FX chip 54, which will be more fully described hereinafter, is the hardware accelerator for RAID XOR operations as well as disk and tape compare operations. FX chip 54 allows for the controller module 10 to read data into shared memory or cache, while also XORing into the FX chip 54. The FX chip 54 is also utilized for writing data from the shared memory to the device ports 14 while XORing into the FX chip 54. Context is carried on a per device port basis, up to 6 ports. The FX chip 54 may also contain the logic to function as a time of year ("TOY") clock with an external oscillator and battery. The TOY may be accessible over the NBUS 21.

As previously described, controller module 10 may incorporate a number of different host interfaces 12. In addition to FDDI, the controller module 10 host interface 12 may be implemented with the YACI and the CIRT chips available from Digital Equipment Corporation for the individual CI ports. The YACI chip is a DMA engine that buffers data into and out of the CI port via the shared memory within the controller module 10. Set up and maintenance of the CI port is carried out by policy software running in the processor 28.

Host interface 12 may also comprise a DSSI interface implemented with the NCR53C720 chip as port processor 34 along with specific programmable array logic ("PAL") to interface between SCSI and DSSI. The NCR53C720 chip runs scripts that are read from shared memory to perform command and DMA operations on the DSSI interface. The policy software sets up and maintains this chip during controller module 10 operations.

Still further, host interface 12 may comprise a SCSI fast-wide-differential ("FWD") interface implemented with the same NCR53C720 chip as with the DSSI interface but without the need for the PALs. The SCSI interface can be 16-bit differential or 8-bit differential depending on the host adaptor being used.

The device ports 14 of controller module 10 in the embodiment shown are SCSI utilizing NCR53C710 SCSI port processor chips. These chips support 8 bit operations up to FAST synchronous transfer mode (less than or equal to 10 megabytes/sec) in accordance with the SCSI specification. The port processors $32_0$ execute scripts read from shared memory and are set up to run these scripts by the policy software. Each device port can have up to 6 devices (6 storage devices for single or dual controller module 10 configurations).

The four diagnostic registers of the controller module 10, comprising read diagnostics registers 80, 82 and write diagnostic registers 84, 86 are incorporated within the controller module 10. The specific bits in the write diagnostic registers 84, 86 control portions of the controller module 10 or send signals from the controller module 10 across the backplane to the optional cache modules as will be more fully described hereinafter. The processor 28 has 9 interrupt inputs. However, since there are more than 9 interrupt sources on the controller module 10, several interrupts are ORed together. In some cases, it is necessary for the processor 28 to read diagnostic registers 80, 82 to determine the specific cause of an interrupt. The write diagnostic registers 84, 86 are used by diagnostic and functional software in order to test or control the controller module 10 operation. Certain bits control test modes for diagnostics to force errors within the controller module 10. Other bits control light emitting diodes ("LED") for diagnostics as well as functional code. Some of the LED bits used by the functional code are used during "warm swap" of attached SCSI devices. A more detailed description of the read diagnostic registers 80, 82 and write diagnostic registers 84, 86 will be given hereinafter. Interrupts for the controller module 10 are run directly into the processor 28 eight maskable dedicated interrupt lines and single non-maskable ("NMI") interrupt. These interrupts cover errors, host and device port events, timing intervals, communication, and power events.

By reference to the following table, the controller module 10 memory allocation is shown.

**Table 1: Controller Module 10 Memory Map/Table**

| Memory Region | Addressable space | | |
|---|---|---|---|
| | Base Addr. | Hi Addr. | Bus Width |
| Code Card 40 | F0000000 | F00FFFFF | 16 bits |
| Journal RAM 46 | C8000000 | C8001FFF | 8 bits |
| Diag Regs. 80-86 | E0000000 | E0000030 | 32 bits |
| Serial Port | D8000000 | D800000F | 8 bits |
| Pgmble. Timer 50 | D0000000 | D0000003 | 8 bits |
| Boot ROM 42 | C0000000 | C0001FFF | 8 bits |
| DRAB 38 | A0000000 | A000001C | 32 bits |
| Cache B DRAB 1 | 98000000 | 9800001C | 32 bits |
| Cache B DRAB 0 | 90000000 | 9000001C | 32 bits |
| Cache A DRAB 1 | 80000000 | 8000001C | 32 bits |
| Cache A DRAB 0 | 88000000 | 8800001C | 32 bits |
| Cache B Memory | 50000000 | 50FFFFFF | 32 bits |
| Cache A Memory | 40000000 | 40FFFFFF | 32 bits |
| Port Processor Bus | 30000000 | 38FFFFFF | 32 bits |
| Buffer Memory | 20000000 | 207FFFFF | 32 bits |

| Port Processor 32 Bus Address | | Diagnostics Registers | |
|---|---|---|---|
| Host Port | 30000000 - 3000005C | Write Diag Reg 1 | 90000030 |
| SCSI1 Port | 31000000 - 3100003C | Write Diag Reg 0 | 90000020 |
| SCSI2 Port | 32000000 - 3200003C | Read Diag Reg 1 | 90000010 |
| SCSI3 Port | 33000000 - 3300003C | Read Diag Reg 0 | 90000000 |
| SCSI4 Port | 34000000 - 3400003C | | |
| SCSI5 Port | 35000000 - 3500003C | | |
| SCSI6 Port | 36000000 - 3600003C | | |
| FX Chip 54 | 37000000 - 3700003F | | |
| XBUF 102 | 38000000 - 3801FFFF | | |
| Self-Addrs. Script | 3E000000 - 3E0000xC | | |

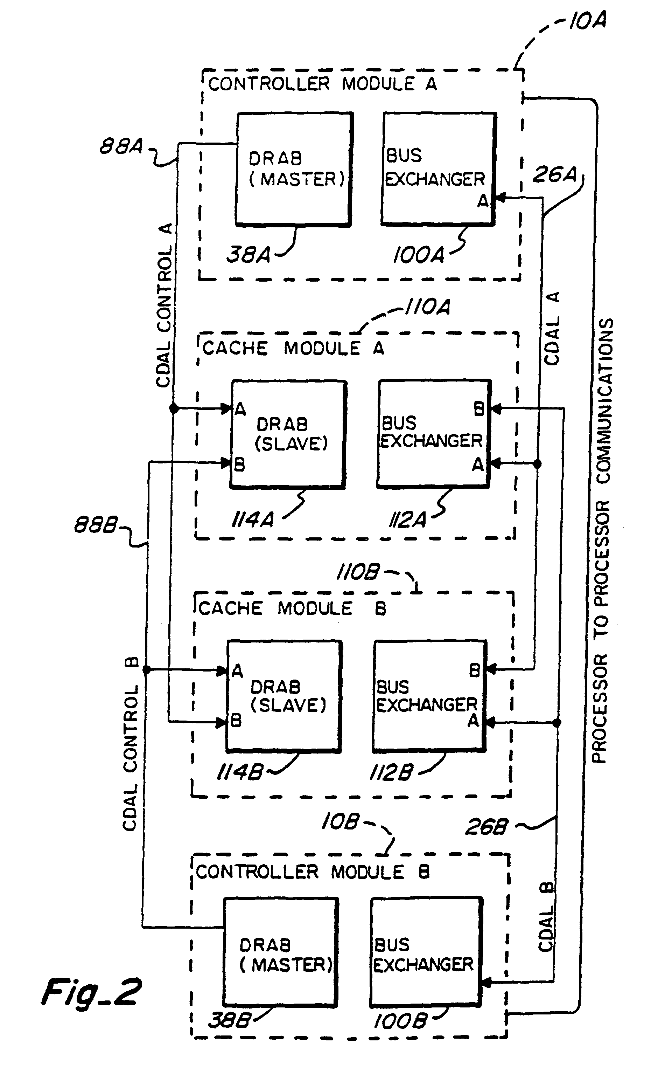

Referring additionally to Fig. 2, an overview logic block diagram of a pair of tightly coupled storage controller modules 10A and 10B as previously described with respect to Fig. 1 is shown. In this illustration, a first controller module is labeled 10A and a second corresponding controller module is labeled 10B. Controller module 10A comprises a DRAB (master) 38A and a bus exchanger 100A. In like manner, controller module 10B comprises a DRAB (master) 38B and bus exchanger 100B.

A cache module 110A is associated directly with controller module 10A. Cache module 110A comprises a DRAB (slave) 114A corresponding to DRAB (master) 38A of controller module 10A. In like manner, a bus exchanger 112A also forms a portion of cache module 110A. Cache module 110B includes a DRAB (slave) 114B and bus exchanger 112B.

As shown, DRAB's (slave) 114A and 114B include an A and B communication ports thereof. In like manner, bus exchangers 112A and 112B also include A and B communication ports thereof. In the tightly coupled storage controller system comprising dual controller modules 10A and 10B with associated cache modules 110A and 110B respectively, CDAL bus 26A control via control bus 88A couples controller module 10A to the A communication port of DRAB (slave) 114A and the B communications port of DRAB (slave) 114B. In like manner, DRAB (master) 38B is coupled to the A communications port of DRAB (slave) 114B and the B communications port of DRAB (slave) 114A of cache module 110A by means of control bus 88B.

Similarly, controller module 10A has the A communications port of its bus exchanger 100A coupled to the A communications port of bus exchanger 112A and the B communications port of bus exchanger 112B. In like manner, controller module 10B has its A communications port coupled to the A communications port of bus exchanger 112B and the B communications port of bus exchanger 112A by means of CDAL bus 26B. Processor 28 to processor 28 communications between controller module 10A and controller module 10B are effectuated through means of a communications medium comprising the back plane into which controller modules 10A and 10B as well as cache modules 110A and 110B are inserted.

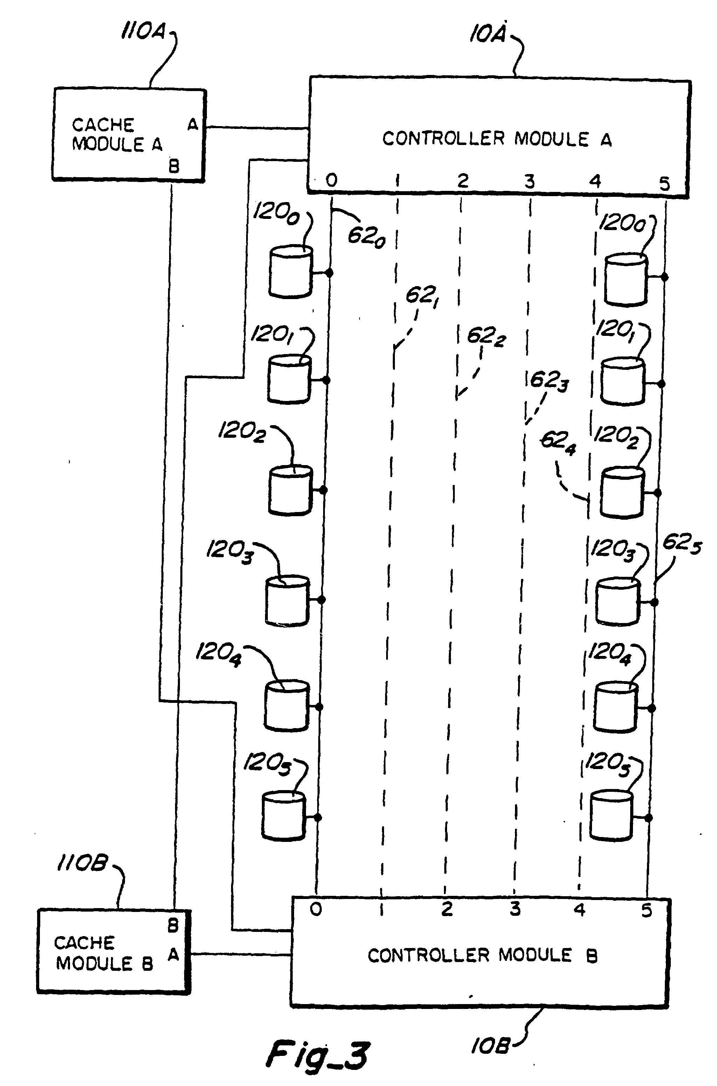

Referring additionally now to Fig. 3, the controller modules 10A and 10B are further illustrated in conjunction with their "locked" or associated cache modules 110A and 110B respectively and further illustrating a plurality of storage devices $120_0$-$120_5$ operatively coupled to a plurality of device buses $62_0$-$62_5$. Devices $120_0$-$120_5$ may be, for example, computer mass storage disk drives. In operation, controller module 10A will control a first subset of the disk drives coupled to device buses $62_0$-$62_5$ while controller module 10B will control an additional subset of such devices $120_0$-$120_5$. As an example only, controller module 10A may control devices $120_0$-$120_2$ on device buses $62_0$-$62_5$ while controller module 10B will control devices $120_3$-$120_5$ on device buses $62_0$-$62_5$.

The controller module 10 MBUS 24 interface allows connection to the optional read or write-back cache modules 110 by means of the bus exchanger 100 and the CDAL bus 26. A read cache module 110 would contain volatile memory, while the write-back cache would be non-volatile. The maximum cache size of any cache module 110 is limited by the module space within the form factor of the module itself as well as the capabilities of the DRAB 38. In certain embodiments of cache modules 110, a read cache module would have a capacity of 32 megabytes utilizing 4 megabit DRAM's. By utilizing 16 megabit DRAM's, the capacity can be increased to 128 megabytes. A write-back cache module 110 will have an AC power off life utilizing a battery backup capability whenever it has been sensed that AC power may fail. The controller module 10 would disable this feature when AC power is available and also enable battery charging for the write-back cache module 110 at this time.

The interface between controller modules 10A and 10B consists of the following signals, carried over the backplane:

Controller Module 10 to Cache Module 110 Data Ports. Each controller module 10A and 10B runs these lines to both caches independently. The cache modules 110A and 110B have two ports per module, one for each controller module 10A and 10B.

> 1. CDAL bus 26 (32 multiplexed data and address plus 4 byte parity) lines.
> 2. CDAL bus 26 Control lines (for memory access only).

Controller module 10 to cache module 110 configuration

> 1. Cache Lock signals. Each controller module 10A and 10B has a signal to each cache module 110A and 110B that allows either exclusive access or arbitrated access. It is assumed that each controller module 10A and 10B, when powering up, will "lock" its associated cache module 110A and 110B respectively, for exclusive access. The only time the arbitrated access is used is when only one controller module 10A (for example) is controlling both cache modules 110A and 110B (after failover).

Cache module 110 to controller module 10 information

> 1. Cache module 110A "In Place". To both controller modules 10A and 10B.
> 2. Cache module 110B "In Place". To both controller modules 10A and 10B.
> 3. Cache module 110A "Lock". To controller module 10A.
> 4. Cache module 110B "Lock". To controller module 10B
> 5. Cache module 110A "Event Interrupt". To both controller modules 10A and 10B. In dual configuration, a cache module 110 not currently used by controller module 10B will have this interrupt masked off.
> 6. Cache module 110B "Event Interrupt". To both controller modules 10A and 10B. In dual configuration, a cache not currently used by controller module 10A will have this interrupt masked off.

Controller module 10A to controller module 10B interface

> 1. Kill Line. Asserted by one controller module 10A or 10B to disable the other controller module 10B or 10A respectively, once it has determined that the other controller module 10 is no longer functional. Further details of this operation will be more fully described hereinafter with respect to the DRAB 38.
> 2. DUART 48 lines. This includes data and flow control lines. Send, Receive and two Clear to Send lines make up this four line interface.
> 3. Controller module 10A "In Place". To controller module 10B. For Failover software.
> 4. Controller module 10B "In Place". To controller module 10A. For Failover software.

Backplane to controller module 10 and cache module 110 interface.

> 1. Controller module 10A Slot 1. To controller module 10A. A low input denotes controller module 10A, or SCSI ID7.
> 2. Controller module 10B Slot 2. To controller module 10B. A high input denotes controller module 10B, or SCSI ID 6.
> 3. Cache module 110A Address Range. Low level.
> 4. Cache module 110B Address Range. High level.

CONTROLLER MODULE 10 HARDWARE INITIALIZATION

Controller module 10 initialization can occur via a power cycle, a software reset, or by a user pressing the "RESET" button on the Operator Control Panel (OCP) of the controller module 10 as will be more fully described hereinafter. Any initialization is delayed 20 milliseconds (power going down, software reset, or the "RESET" button) to allow for cache module 110 management to take place and ensure customer data integrity. Completion of boot means the controller modules 10A and 10B are ready to communicate with a host computer.

Initialization begins with the processor 28. The processor 28 begins booting by executing an internal self-test, and upon successful completion, reading an "Initial Boot Record", which contains the address of the hardware setup parameters and process control information.

Following the initialization of processor 28, software in the memory card is executed to perform. Minimum Integrity Self-Test Diagnostics. Enough tests are performed to ensure that the processor 28 bus hardware is good, the rest of the memory card is good, and that shared memory is good. This test must complete successfully in order for the module operating system ("EXEC") as will be more fully described hereafter to start up and for controller module 10 initialization to continue. Note that the shared memory must have the first megabyte working in order for the shared memory to be deemed good (the rest of the memory can have up to 16 faulty areas before being deemed bad). After the processor 28 has booted, controller module 10 "Self-Test" diagnostics are executed to verify:

1. DUART 48 and timer 50 chips.
2. Memory code card 40 image.
3. DRAB 38 gate array.
4. Shared DRAM buffer 30 memory.
5. All processor 28 to shared memory bus access types.

The 32KB SRAM with battery backup, called the NV journal RAM 46, is only tested after functional code has initialized because of several reasons. First it contains either default or user-enabled parameters for controller module 10 operation. Second, it may contain write journal information for RAID operations. This means a diagnostic for the write journal RAM 46 may only be run when the memory is "free", meaning no write journal information within the memory, and the parameter information shadowed in the DRAM buffer 30 memory behind the DRAB 38. When this situation occurs, the SRAM test may be called. A failure in this test will cause the controller module 10 to software reset.

These tests are required to be run before the controller module 10 software image is copied from the memory code card 40 to shared DRAM buffer 30 memory. When these diagnostics have successfully completed, the controller module 10 software image is copied from the memory code card 40 to the shared DRAM buffer 30 memory (first megabyte of the memory). The image is then verified by controller module 10 diagnostics and control is passed to the controller module 10 executive. The integrity of the DRAM code image is covered by the ECC that is incorporated in the DRAB 38 chip, thereby not requiring periodic checks of the DRAM code image.

EXECutive Initialization. The EXEC initializes next, followed by a call to the Diagnostic Execution Monitor that completes the controller module 10 subsystem diagnostics. This is done to allow the controller module 10 diagnostics to use the services provided by the controller module 10 executive to handle interrupts and errors.

calls the remaining tests for a controller module 10 (including tests for the optional cache module 110, if installed). The tests that will/may call, depending on what is present on the module or backplane are:

1. I/D Cache 44 for the processor 28.
2. RAID FX chip 54 test.
3. Device port processor 32 test(s). One to six port processors 32 are tested from the processor 28 and via diagnostic scripts. These tests are immune to all port activity, including bus resets.
4. Host interface 12 Port test.
5. Cache Module 110 Test (Slave DRAB 114 and cache memory). This test is special because of the possible large size of memory on a cache module 110. This test will be run in two parts. The first part will test the DRAB's 114, the addressing hardware of the whole memory, and 1MB of memory. The second part will be executed as a thread, in conjunction with the controller module 10 Cache Manager, to test 1MB chunks of the cache module 110 and turn them over to functional code as they have been tested. This cuts back on boot time drastically, while not severely limiting controller module 10 performance while testing memory.

When these diagnostics have completed successfully, control is returned to the controller module 10 executive. The controller module 10 executive completes its initialization (as more fully described hereafter) and starts controller module 10 software.

If any error occurs during any portion of the self-test, the controller module 10 light emitting diodes ("LED's") will be set with the specific error code of the failure. An error report will also be printed on the controller module 10 console, if the Diagnostic Execution Monitor fielded the error for a diagnostic.

Dual-Controller module 10A and 10B Booting

Special actions occur during a boot of a dual-controller module 10A and 10B configuration. When the controller module 10 DUART 48 diagnostic has completed, it may send a message to the other controller module 10B to alert it that it is booting. When diagnostics are complete, more extensive messages might then be sent between controller modules 10A and 10B. The first message sent by diagnostics would then basically be an indication that the controller module 10A is booting up so that the controller module 10B won't decide that the controller module 10A is disabled and physically disable the first to boot controller module 10A from trying to come up as will be more fully described hereinafter.

The controller modules 10A and 10B in a dual-controller module 10A, 10B configuration may or may not boot synchronously, the likely case being that they will have their boots skewed in time. This asynchrony is by design as controller modules 10A, 10B can have different boot rates depending on the amount of good memory found during boot, operator intervention on one controller module 10 by "RESET"ing one controller module 10 and so forth. The mechanism just described to alert a controller module 10A, for example, that is ahead in the boot process that there is a second controller module 10B trying to boot as well, is part of the failover scheme for the controller modules 10. A controller module 10B, for example, that is detected by a "live" controller module 10A to be "dead" or not responding properly will be physically disabled by the "KILL" line between the two controller modules 10A and 10B as will be more fully described hereinafter.

If a controller module 10A, for example, cannot boot properly due to failure in diagnostics or software initialization, the second controller module 10B will have to disable controller module 10A by using the KILL line and proceed to control the storage that controller module 10A was serving to the host computer(s).

Dual-Controller Module 10A and 10B Interface

Controller modules 10A and 10B communicate with each other in three ways:

1. "Other Controller Module 10 in place" signals between controller modules 10A and 10B. Communication will not be attempted unless this signal is asserted in a controller module 10 Read Diagnostic register 80,82.

2. UART signals. There are four signals shared between the controller modules 10A and 10B, the UART transmit and receive lines, along with Clear to Send lines from each controller module 10A and 10B. This is the main channel for communication between controller modules 10A and 10B and is used by diagnostics and functional code to carry out this communication.

3. KILL line. This line is part of a circuit in the DRAB 38 gate array that allows the controller module 10A, for example, when it receives an indication that the controller module 10B in a dual-controller module 10 configuration is broken, to disable controller module 10B and take over its cache module 110B and storage devices it was previously serving to the host computer(s). This line is "failsafe" in that once a controller module 10A or 10B asserts this line, it prevents itself from being "killed" by the other controller module 10B or 10A respectively. In the event that both controller modules 10A and 10B think the other controller module 10B and 10A is broken (for example a bad UART connection), the first controller module 10 to set the KILL line survives and takes over control of all devices.

This interface is used by controller module 10 Failover software as well as controller module 10 Configuration and controller module 10 Warmswap software. Controller module 10 Failover uses this interface to keep the other controller module 10 aware that it is alive and to take over the other controller module 10's job if it determines that the other controller module 10 is broken. Controller module 10 Configuration software uses this interface to convey information about storage attached to it that is serving one or more host computer(s). This information is necessary in the event of failover, so a controller module 10 can accurately perform the failover maneuver. Controller module 10 Warmswap software uses this interface to convey the current state of the DECstor/me enclosure (available from Digital Equipment Corporation) of LED's as well as the OCP Bus Quiesce Request buttons on each controller module 10. One controller module 10B, for example, will tell the other controller module 10A what state to put the buttons and LED's into.

Cache Module 110 Initialization

The cache modules 110 are initialized in one of two methods. The choice of method depends on whether the cache module 110 is a "read" cache or "write-back" cache and, if a write-back cache, if there is valid data in the cache module 110.

If the cache module 110 is a read cache, then after controller module 10 diagnostics are completed, both the interface and memory of the read cache are tested by diagnostic software.

If the cache module 110 is a write-back cache, then the controller module 10 software checks for valid data in the cache before diagnostics test the cache module 110. If there is valid data in the write-back cache, then nondestructive diagnostics will be run on the cache interface to the controller module 10 that "owns" the cache module 110. If there is not valid data in the write-back cache, then diagnostics will be run on the entire cache module 110, the same as done for a read cache module 110.

DECstor/me Subsystem Initialization with Controller Modules 10

DECstor/me subsystem initialization takes place at power-up with subsets of initialization activities occurring during normal operation of the subsystems due to failures, partial power outages, and errors.

The total sequence for initialization is:

1. Power ON. This causes all shelves to be reset, and devies contained in the shelves (drives, controller modules 10, caches modules 110 and so forth) to being caused to INIT.
2. Entity self-test (if present).
3. The controller modules 10 begin interrogating those devices it knows about (including the other controller module 10, if present). These INIT activities may include spinning up drives, in which case the controller module 10 may blink the light on the drive enclosure that the drive is spinning up within (for spin-down, the same blinking occurs as well).
4. Controller module 10 begins data transfers on behalf of the host computers. DECstor/me is operational.

Controller Module 10 Lamps and Buttons

The controller module 10 has an Operator Control Panel (OCP) module attached to the controller module 10 that is comprised of 7 buttons with embedded LED's in the buttons. The OCP is on the edge of the controller module 10 that faces out toward the door of the cabinet for easy access. As an example, the left-most LED may be green and the right-most six may be amber. The controller module 10 can light each LED separately via Write-Diagnostic Register (0) 84. The buttons can be read via Read-Diagnostic Register (0) 80. The left-most button is always designated as the controller module 10 RESET button. The usage of the LED's and the remaining six buttons varies depending on the state of the controller module 10, whether it is booting or in normal operation.

During controller module 10 boot, the LED's are for diagnostic use in reporting errors and controller module 10 state. At the moment the controller module 10 boot begins, hardware turns on the left-most LED that is in the RESET button, with the remaining six LED's turned off. This denotes the 'boot' state. If at any point in the boot sequence a fault is found by the controller module 10 diagnostics, the right-most six LED's are written by the controller module 10 diagnostics with the error code denoting the fault that has been detected. This fault code will be flashed at 3Hz, with the left-most LED remaining on and not flashed.

Following controller module 10 boot, the left-most LED is flashed at 1Hz. This denotes the "running" state of the controller module 10 and is the "heartbeat" of the machine. At this point the usage of the LED's and the right-most six buttons has changed from diagnostics to functional usage. At this time these six buttons become the OCP "Bus Quiesce Request" buttons for use in device warmswap or device warm insertion/removal.

If at any time, a controller module 10 fails following boot, either during diagnostics or while running functional code, the controller module 10 will exhibit the following behavior in the LED's:

1. If the failure was in diagnostics, ALL LED's will be lit with no blinking.
2. If the failure was in Functional code (due to a BUGCHECK loop), all but the right-most LED/button will be lit with no blinking.

Device Warmswap

The Modular Array Storage Subsystem affords the ability to warmswap attached storage devices. The methods for controller modules 10 differ based on the type of Host Interconnect on the controller module 10 being swapped. There is a single method for attached storage warmswap. Controller module 10 attached device warmswap is used in conjunction with the right button(s) and LED's on the controller module 10.

Controller Module 10 Attached Storage Warmswap

Controller module 10 device warmswap is really a sequence of steps that allows an operator to safely remove a device and then later install another device. These steps are broken up into removal and insertion steps. This means that "safe" removal of a drive or addition of a drive is also possible for situations other than drive failure (and associated warmswap). The reasons for the steps below are for data integrity for other controller module 10 devices, and to reduce the chance of an operator causing a port to be unusable for a long period of time (which could disable several RAID sets). Only one port may be quiesced at any one time.

In order to remove a drive, either controller module 10 or an operator must determine that the operation is necessary. The controller module 10 can determine that a device is bad by trying to use it and finding no response or too many errors from the device. An operator may do what he wants to determine a device must be removed. In either case, a sequence must be carried out in order to properly remove a device.

The sequence for removal of a device is:

1. The controller module determines a drive is bad or an operator uses the console to declare a drive bad. This causes the LED associated with that drive's port and drive enclosure to be illuminated by the controller module 10 software. This LED is embedded in one of the OCP "Bus Quiesce Request" buttons.

2. An operator pushes the illuminated OCP "Bus Quiesce Request" button on the front of the controller module 10. This button must be held until such time as the controller module 10 software recognizes the button. The operator can tell that the controller module 10 has recognized the button by the fact that the remaining amber LED's will flash momentarily. If the LED in the button was already on, it stays on. If the LED in the button was off, it is now on. If the button is not held in long enough, or multiple buttons are pushed in quick succession, they will be ignored. If a button has been recognized by the controller module 10 software and a second button is pressed, the second button push will be ignored.

The OCP "Bus Quiesce Request" signals to the controller module 10 Warmswap software to proceed with quiescing all activity on this port. The time taken to quiesce a port is given by the following equation:

$$Quiesce\_Time = Operator\_Delay\_Factor +$$

$$Time\_to\_run\_down\_IO$$

Operator_Delay_Factor is currently set at 30 seconds. The length of time required may as noted so that the actual time a SCSI bus is quiesced is kept to a minimum for RAID operations. The Time_to_run_down_IO is dependent on port I/O load and can vary from almost zero to minutes.

3. When the port is quiesced, both the port OCP "Bus Quiesce Request" button light and the DECstor/me drive enclosure light will be flashed, informing the operator that the device may be removed safely. At this point it is very important to note that ALL activity on the port has stopped.

4. The operator removes the device. The physical action of removing the drive causes a circuit in the DECstor/me drive enclosure to send an interrupt to the controller module 10, alerting the controller module 10 that the bus may safely be used again, thereby minimizing operator involvement in the warmswap process. Tho controller module 10 receives an interrupt (SP_LO_INT L) when this occurs, so that the controller module 10 can resume usage of the bus immediately. This feature reduces operator intervention to cut the time that the port is unusable.

In order to insert a device, a similar procedure is employed. Steps 2-4 are used to insert the device with a minimum of operator intervention and port down-time.

Warmswap is then the combination of a device removal followed sometimes later by a device insertion.

If a situation occurs wherein an insertion or removal sequence is started and a "Bus Quiesce Request" has been initiated, an operator can cancel this by depressing the button a second time, waiting for the LED's to momentarily flash and then checking to see that the LED in the button has gone out.

Controller Module 10 Swap

This feature will involve a shutdown of the controller module 10 or cache module 110 to be swapped out prior to actual removal. This shutdown will involve software, unless the controller module 10 to be removed is completely non-functional. If the controller module 10 to be replaced is in a dual redundant configuration, the surviving controller module 10 may be shutdown temporarily when the controller module 10 to be replaced is actually to be removed or a warmswap feature can be provided.

Diagnostic Registers

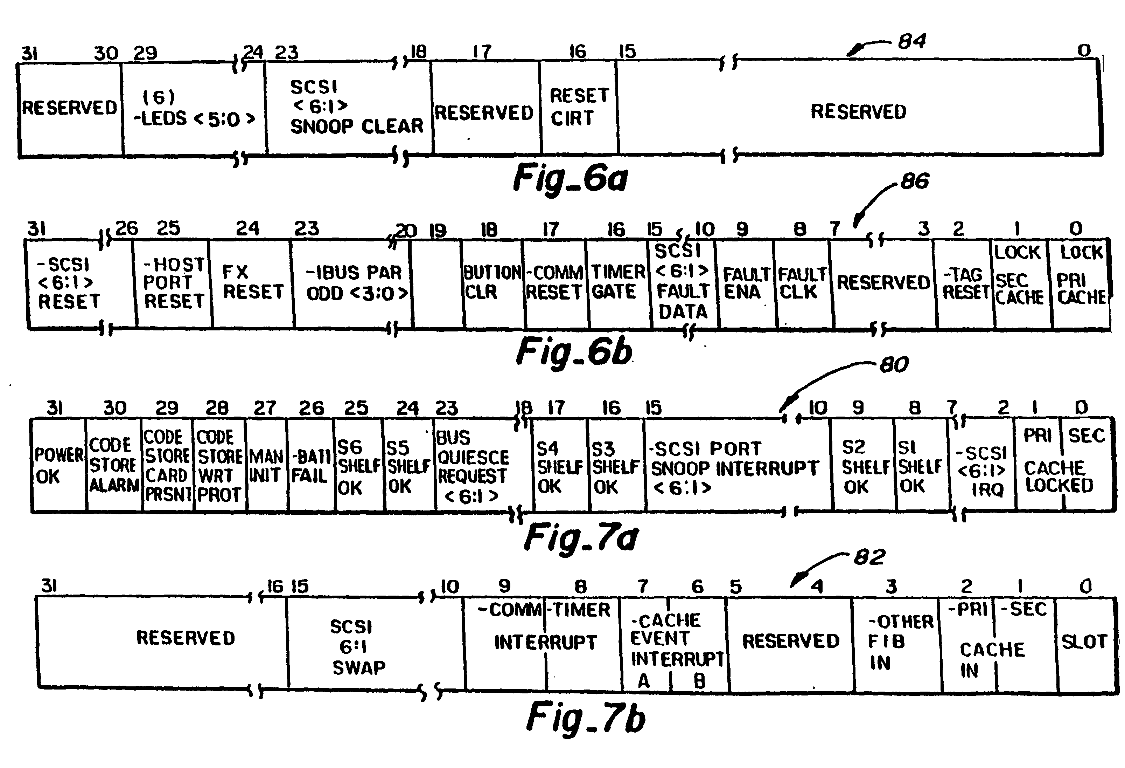

The bits in Write Diagnostic Register (0) 84 are illustrated in Fig. 6a and further described in the following table.

Table 2

| Bits | Name | Description |
|---|---|---|
| 0-15 | Reserved | |
| 16 | RESET_CIRT | When written with a 1, this bit asserts the reset input to the CIRT chips in the CI host port. This bit is initialized to 1. |
| 17 | MODULE_RESET | When written with a 0, this bit forces a reset to the module hardware, thus causing a re-boot of controller module 10. This bit initializes to a 1. |
| 18-23 | SCSI[1:6]_ SNOOP_CLEAR | When written with a 1, these bits clear the corresponding interrupt request from the SCSI device ports to the processor 28. At the same time, they also clear the corresponding S[1:6]_SWAP bits in Read Diagnostic Register (1) 82. These bits are initialized to 1. |
| 24-29 | -LED [0:5] | When written with a 0, these bits turn on the corresponding LED's in the OCP Bus Quiesce Request buttons, visible on the front of the controller module 10. These bits are initialized to 1. |
| 30-31 | Reserved | |

| | Write Diagnostic Register (0) 84 | |
|---|---|---|

The bits in Write Diagnostic Register (1) 86 are illustrated in Fig. 6b and further described in the following table.

Table 3:

| | Write Diagnostic Register (1) 86 | |
|---|---|---|
| Bits | Name | Description |
| 0 | LOCK_PRIMARY _CACHE | When written with a 1, this bit asserts the lock signal to the optional cache module 110 normally associated with this controller module 10. The controller module 10 then has exclusive access to its cache module 110 and the alternate controller module 10 cannot access this cache module 110. This bit is initialized to 0. |
| 1 | LOCK_SECONDARY_ CACHE | When written with a 1, this bit asserts the lock signal to the alternate optional cache module 110 not normally associated with this controller module 10. This controller module 10 then has exclusive access to the alternate cache module 110. It is assumed that the alternate controller module 10 has also been disabled via the KILL signal. This bit is initialized to 0. |
| 2 | -TAG RESET | When written with a 0, this bit asserts the reset input to the processor 28 Z/D cache 44 tag RAMs 70. This bit is initialized to 0. |
| 3-7 | Reserved | |
| 8 | SCSI_FAULT_CLK | This bit is used to clock data from bits 10-15 of this register to the corresponding SCSI device port. The data in bits 10-15 must be set up prior to writing a 1 to this bit. Data in bits 10-15 may be changed when a 0 is written to this bit. One bit is transmitted to the corresponding SCSI device port for each 1-0 combination written to this bit. This bit initializes to 0. |
| 9 | Fault_Enable_H | When written with a 1, this bit enables the fault clock to go to the SCSI flex strips in the drive enclosures for a specified port to set/clear drive enclosure LED's. This bit is initialized to 0, thereby disabling the clock. |

Table 3: (continued)

| Bits | Name | Description |
|---|---|---|
| | Write Diagnostic Register (1) 86 | |
| 10-15 | S[1:6]_YAULT_ DATA - | These bits, used in conjunction with bit 8 of this register, drive the fault data lines in the corresponding SCSI device ports. These bits are used to generate a serial bit stream that is detected and decoded by individual devices to control LED's on the front of each device in a STORME shelf. These bits are initialized to 0. |
| 16 | TIMER_GATE | When written with a 1, this bit enables the timer 50 interrupt to the processor 28. This bit is initialize to 0. |
| 17 | -COMM_RESET | When written with a 0, this bit resets the DUART 48, preventing communication to the console terminal or between controller modules 10. This bit is initialized to 0. |
| 18 | -Button_Clear H | When written with a 0, this bit enables Bus Quiesce Request and SWAP interrupts to occur and be seen. This bit initializes to a 1, causing a clear to any button or swap signal, so that interrupts will not occur and the signals will not be seen. |
| 19 | -LED[6] | When written with a 0, this bit causes the left-most LED in the OCP (Operator Control Panel) module to be illuminated. When written with a 1, the LED is extinguished. This bit initialized to a "0", causing the LED to be illuminated, denoting "Controller Module 10 Booting." |
| 20-23 | -IPAR_ODD[0:3] | When written with a 1, these bits force even parity on the corresponding bytes 0-3 on the IBUS 19, in order to force parity errors and check parity logic by controller module 10 self-test software. These bits are initialized to 0. |
| 24 | -FX_RESET | When written with a 0, this bit asserts the FX RAID chip 54 reset input. It is initialized to 0. |
| 25 | -HOST_PORT_ RESET | When written with a 0, this bit asserts the reset to the Host Port logic. It is initialized to 0. |
| 26-31 | -SCSI[1:6]_RESET | When written with 0, these bits assert the corresponding reset input to port processor 32 SCSI controller chip. These bits are initialized to 0. |

The read diagnostic registers 80,82 contain the state of signals observed from the module hardware. Some bits are specific error bits, while others are status bits, either from the DECstor/me cabinet, the other controller module 10, or the cache modules. The rest of the bits are the individual interrupt bits that are ORed together to form combined interrupts to the processor 28.

The status bits are used by functional software in order to control warmswap and failover between controller modules 10 and cache modules. The interrupt bits are used by functional software to find out exactly what interrupt occurred during normal operation.

The bits in Read Diagnostic Register (0) 80 are illustrated in Fig. 7a and further described in the following table.

Table 4:

| Read Diagnostic Register (0) 80 | | |
|---|---|---|
| Bits | Name | Description |
| 0 | SECONDARY CACHE_LOCKED | This bit indicates the state of the <u>alternate</u> controller module's 10 LOCK PRIMARY CACHE bit. When 1, it indicates that the other controller module 10 has locked its own primary optional cache module 110 (normal condition). When this is true, this controller module 10 may not write a 1 into its LOCK SECONDARY CACHE bit. When 0, this bit indicates that the other controller module 10 does not have its own primary cache module 110 locked. |
| 1 | PRIMARY_ CACHE_LOCKED | This bit indicates the state of the <u>alternate</u> controller module's 10 LOCK SECONDARY CACHE bit. When 1, it indicates that the other controller module 10 has its secondary optional cache module 110 (ie, this controller module's 10 primary cache) locked. This indicates that the other controller module 10 has detected an abnormal condition within the subsystem. When 0, this bit indicates that the other controller module 10 does not have this controller module's 10 primary cache locked (normal condition). |
| 2-7 | -SCSI[1:6]_IRQ | When 0, these bits indicate which port processor 32 interrupted the processor 28. These bits are OR'd together to form the SCSI Port interrupt to the processor 28. |
| 8-9 | S[1:2]_SHELF_OK | When 1, these bits indicate that the power and cooling for the specified shelves supporting SCSI ports 1 and 2 are within satisfactory limits. |
| 10-15 | -SCSI_PORT_ SNOOP_ INTERRUPT[1:6] | When 0, these bits indicate which port processor 32 asserted the low priority SCSI Port interrupt to the processor 28. |
| 16-17 | S[3:4]_SHELF_OK | When 1, these bits indicate that the power and cooling for the specified shelves supporting SCSI ports 3 and 4 are within satisfactory limits. |
| 18-23 | BUS_QUIESCE_ REQUEST[1:6] | When 1, these bits indicate that the corresponding OCP Bus Quiesce Request button on the front of the module has been pushed. No debouncing is provided in hardware. |
| 24-25 | S[5:6]_SHELF_OK | When 1, these bits indicate that the power and cooling for the specified shelves supporting SCSI ports 5 and 6 are within satisfactory limits. |
| 26 | -BATTERY_FAIL | When 0, this bit indicates that the battery associated with the write journal RAM 46 has failed. |

Table 4:   (continued)

| Bits | Name | Description |
|---|---|---|
| | Read Diagnostic Register (0) 80 | |
| 27 | MANUAL_INIT | When 1, this bit identifies to software in the controller module 10 that a reset that just occurred to the module was caused by manual intervention by an operator pressing the "RESET" button on the front of the controller module 10. |
| 28 | CODE_STORE WRITE_PROTECT | When 1, this bit indicates that the code card 40 is write protected (this is for SRAM code cards 40). |
| 29 | -CODE STORE CARD_PRESENT | When 0, this bit indicates that the code card 40 is inserted into the controller module 10. |
| 30 | -CODE_STORE_ ALARM | When 0, this bit indicates that the battery inside the code card 40 (SRAM only) is failing. |
| 31 | POWER_OK | When 1, this bit from the dc power supply indicates to the controller module 10 software that power is ok for the module. In the event of an NMI interrupt to the processor 28, if this bit is 0, it indicates a power fail has occurred; if this bit is 1, it indicates that a DRAB 38-detected serious error has occurred (such as double bit ECC, parity, etc.) |

The bits in Read Diagnostic Register (1) 82 are illustrated in Fig. 7b and further described in the following table.

Table 5:

| Bits | Name | Description |
|---|---|---|
| | Read Diagnostic Register (1) 82 | |
| 0 | SLOT | This bit is input from the backplane and is readable anytime after INIT of the controller module 10. This bit indicates to a controller module 10 whether it is controller module 10A or controller module 10B. It is also used to determine which SCSI ID the controller module 10 should assume for its device ports. Controller module 10A and SCSI ID 6 are assumed if the SLOT bit is 0. Controller module 10B and SCSI ID 7 are assumed if the SLOT bit is 1. |
| 1 | -SECONDARY_ CACHE_IN | When 0, this bit informs a controller module 10 that the optional cache module 110 normally associated with the other controller module 10 in a dual-controller, dual-cache configuration is in place in the backplane. |
| 2 | -PRIMARY_ CACHE_IN | When 0, this bit informs a controller module 10 that its primary optional cache module 110 is in place in the backplane. |
| 3 | -OTHER_CNTRLR_IN | When 0, this bit indicates that the other controller module 10 is in place in the backplane in a dual-controller configuration. |
| 4-5 | Reserved | |
| 6 | -CACHE_EVENT_ INTERRUPT_B | When 0, this bit indicates that cache module 110 B is asserting its Event Interrupt signal. |

Table 5: (continued)

| Bits | Name | Description |
|------|------|-------------|
| | Read Diagnostic Register (1) 82 | |
| Bits | Name | Description |
| 7 | -CACHE_EVENT_ INTERRUPT_A | When 0, this bit indicates that cache module 110 A is asserting its Event Interrupt signal. |
| 8 | -TIMER_ INTERRUPT | When 1, this bit indicates that the timer 50 interrupt is asserted. |
| 9 | -COMM_ INTERRUPT | When 0, this bit indicates that the DUART 48 interrupt is asserted. |
| 10-15 | -S[1:6]_SWAP | When 0, these bits indicate that a device has been inserted into or removed from the corresponding SCSI device port OR that the corresponding Bus Quiesce [1:6] button has been depressed. These two signals are logically "OR"'d. These bits are reset to 1 by writing a 1 in the corresponding SCSI[1:6] SNOOP_CLEAR bit in Write Diagnostic Register (1) 86. |
| 16-31 | Reserved | |

Controller module 10 Interrupts and Relative Priority

Controller module 10 interrupts are direct inputs to the processor 28. Since there are more interrupt sources than interrupt inputs, several interrupt sources are ORed together to reduce the total number of inputs. As a result, in some cases, software is required to read diagnostic registers 80-86 to determine exactly which interrupt actually occurred.

These interrupts have the following priority (from highest to lowest down the list):

Table 6:

| Processor Interrupt | Name | Description |
|---------------------|------|-------------|
| | Processor 28 Interrupts | |
| Processor Interrupt | Name | Description |
| NMI | SYSERR | The SYSERR interrupt is the logical OR of the DRAB 38 Error Interrupt (serious, not event), the two possible Cache Error interrupt lines, and POWER_OK. The first three are for serious module errors, when the processor 28 is accessing one of the memories. The last is for power fail. |
| 7 | CLOCK | The clock interrupt is for the Controller Module 10 Executive to keep track of elapsed time. This is not the same clock for Time of Year (TOY) that may be on the NBUS 21. |
| 6 | HOST_PORT | This interrupt is for the Controller Module 10 Host Port in the event of a serious error. |
| 5 | HOST_PORT LOW_PRIORITY | This interrupt is for the Controller Module 10 Host Port for normal processing support from the processor 28. |
| 4 | FX | This interrupt is for the FX RAID chip 54 for error detection. |

Table 6:   (continued)

| Processor 28 Interrupts | | |
|---|---|---|
| Processor Interrupt | Name | Description |
| 3 | SCSI_PORT | This interrupt is the logical OR of the six SCSI port processor 32 error interrupts. This interrupt is asserted when the SCSI processor halts on a significant event. Which SCSI device port actually asserted the interrupt line is found in Read Diagnostic Register (0) 80. |
| 2 | SCSI_PORT_LOW_ PRIORITY | This interrupt is the logical OR of the six SCSI port processor 32 outputs used for normal processing support from the processor 28 and the six inputs from the SCSI device ports that indicate a device has been inserted or removed. |
| 1 | COMM/TIMER_INT | This interrupt is the logical OR of the interrupts generated by the DUART 48 and the timer 50. |
| 0 | DRAB_INTERRUPT | This interrupt is the logical OR of the DRAB 38 event interrupt and the two optional cache event interrupts. This is for non-fatal errors such as single-bit errors that have been corrected or battery status for write-back cache module 110s. |

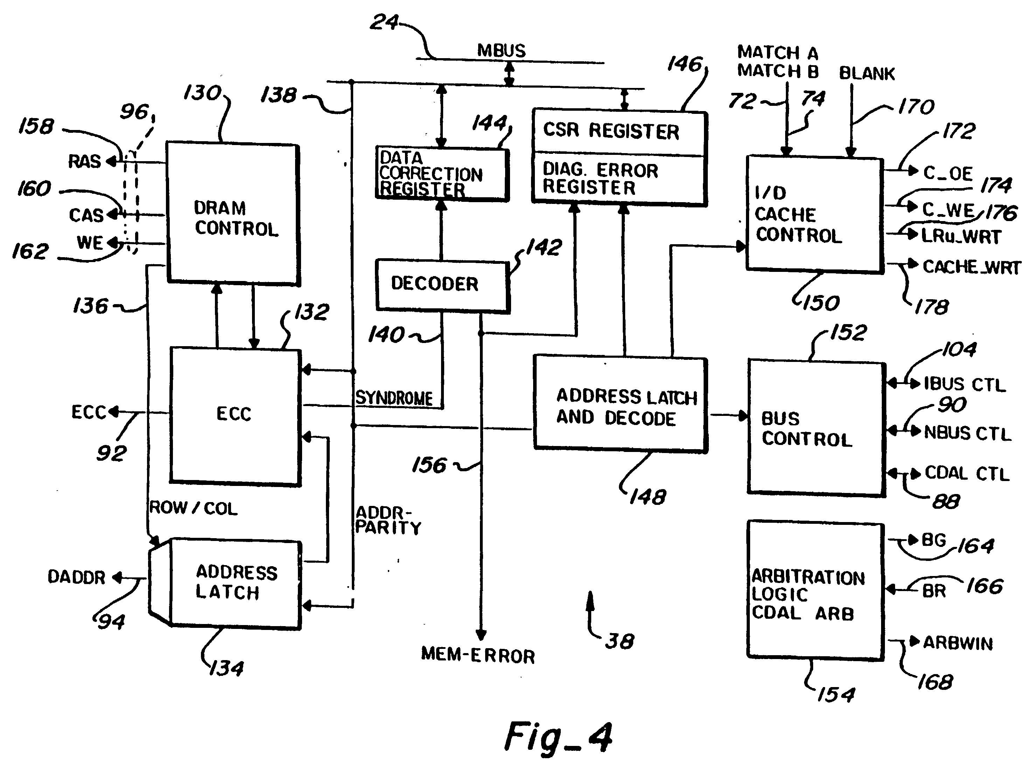

With reference additionally now to Fig. 4, the logic block functionality of the DRAB 38 for use in controller module 10 is shown. DRAB 38, which is coupled to MBUS 24 comprises, in pertinent part, a DRAM control block 130 and an associated ECC block 132 and address latch 134. DRAM control block 130 provides a number of control line 96 outputs to the DRAM buffer 30 illustrated in Fig. 1. Control lines 96 comprise row address strobe ("RAS") line 158, column address strobe ("CAS") 160 write enable ("WE") line 162 and output enable ("OC") lines. In addition, DRAM control block 130 provides a row/col line 136 input to address latch 134. ECC block 132 is coupled to DRAM control block 130 and provides and ECC output on ECC lines 92 to DRAM buffer 30. Address latch 134 provides an output on DADDR lines 94. Inputs to ECC block 132 and address latch 134 are taken from MBUS 24 on address/parity ("ADDR_PARITY") line 138. ECC block 132 receives an additional input on syndrome line 140 from decoder 142 coupled to MBUS 24 by means of data correction register 144. Decoder 142 also provides an output labeled memory error ("MEM_ERROR") on line 156 for input to CSR register/diagnostic pararegister 146 which is also coupled to MBUS 24.

Address latch and decode logic 148 is coupled to ADDR_PARITY line 138 and provides outputs to CSR register/diagnostic error register 146, I/D cache control 150 and bus control logic 152. I/D cache control 150 receives as inputs the signals on match A line 72 and match B line 74 as well as a bank input signal on bank line 170. I/D cache control provides outputs on C_OE line 172, C_WE line 174, LRU_WRT line 176 and CACHE_WRT line 178.

Bus control logic 152 is bidirectionally coupled to control bus 88 here illustrated separately as IBUS 16 control ("CTL") bus 104 and CDAL CTL bus 88. Further, bus control logic 152 is bidirectionally coupled to NBUS 21 control lines 90 as shown. Additionally, DRAB 38 comprises an arbitration logic providing outputs on bus grant ("BG") line 164 and NBUS 21 bus master arbitration winner ("ARBWIN") line 168. Arbitration logic 154 receives as input a signal on bus requests ("BR")/cache select line 166.

DRAM BUFFER 30 CONTROL AND ECC LOGIC

The DRAB 38 chip's DRAM buffer 30 controller is programmable. High performance burst read operations of 4 and 8 LONGWORDS in length are possible. The read burst length is programmable for each NBUS 21 requester. Port processor 32 and port processor 34 SCSI control chips will work with 4 or 8 LONGWORD bursts. The host interface 12 will only generate single LONGWORD reads or 4 LONGWORD burst accesses to buffer memory. The FX chip 54 XOR engine will generate single LONGWORD, and either 4 or 8 LONGWORD burst accesses.

Burst accesses generated by the processor 28 port can terminate on any longword. The BLAST signal indicates that the current longword transfer is the last for the bus access.

The internal ECC detection and correction can be turned off. By writing a one to the CSR:ECCI bit, ECC error checking and correction is inhibited. Clearing this bit enables both error detection and single bit error correction.
The DRAB 38 ECC code includes ROW, COLUMN, and HI address bits to allow some detection of addressing errors in the DRAM buffer 30 array. The COLUMN bit in the ECC code is the even parity bit of address bits <11:2>. The ROW bit is the even parity of address bits <21:12>, and the HI bit is the even parity bit of address bits <25:22>.
The DRAB 38 ECC code is shown in the following table.

## Table 7: DRAB 38 ECC CODE

```
ECC MATRIX
code_depth #7;
code_width #43;
        HRC       CCC   CCCC   DDDD   DDDD   DDDD   DDDD   DDDD   DDDD   DDDD   DDDD
        IOO       000   0000   3322   2222   2222   1111   1111   1100   0000   0000
        WL        654   3210   1098   7654   3210   9876   5432   1098   7654   3210
CHECK
BIT 0:  011       000   0001   0100   0100   1100   0111   0011   1011   1011   1000

CHECK
BIT 1:  101       000   0010   1010   0010   0010   1011   1101   0101   1101   0100

CHECK
BIT 2:  111       000   0100   0001   1001   0001   1100   1110   1110   0110   0011

CHECK
BIT 3:  000       000   1000   1000   1000   1000   1111   1000   1000   1000   1111

CHECK
BIT 4:  111       001   0000   1101   1011   1110   0110   0001   0010   0100   1001

CHECK
BIT 5:  110       010   0000   1110   1101   1011   1001   0100   0001   0010   0110

CHECK
BIT 6:  111       100   0000   1011   1110   1101   1111   0010   0100   0001   0000
```

REGISTER DEFINITIONS

REGISTER ADDRESS MAP

All internal registers are accessed through the MBUS 24 port. The base address of the DRAB 38 internal registers is determined by a chip select signal provided by the module.

DRAB 38 setup register

## Table 8: DRAB 38 setup Register

```
DRAB base +
         +------------------------------+------------------------+------------------------+------
         |------------------------------+                        |                        |
   00    |                    Setup     |                        |      RW                |
         +------------------------------+------------------------+------------------------+------
         |------------------------------+
         31                24 23        16 15                08 07                      00
```

DRAB 38 CSR register

## Table 9: DRAB 38 Control and Status Register

```
DRAB base +
04  |                    Control and Status              |RW
         31        24 23         18 15      08 07        00
```

## Table 10: DIAG diagnostic control Register

```
DRAB base +
04  |                    DIAG control                    |RW
         31        24 23         16 15      08 07        00
```

## Table 11: DRAM Buffer 30 Error Register

```
DRAB base +
04  |                    Dram Error                      |RW
         31        24 23         16 15      08 07        00
```

## Table 12: Error Address Register

```
DRAB base +
04  |                    Error Address                   |RW
         31        24 23         16 15      08 07        00
```

## Table 13: Error Data Register

```
DRAB base +
04  |                    Error Data                      |RW
         31        24 23         16 15      08 07        00
```

## Table 14: Error Region Register

DRAB base +

| 04 | | Error Regions | | | RW |

31       24 23       16 15       08 07       00

## Table 15: Region Setup Register

DRAB base +

| 04 | | Region Setup | | | RW |

31       24 23       16 15       08 07       00

## Table 16: I/D CACHE 44 HIT COUNTer

DRAB base +

| 04 | | I/D CACHE HIT COUNT<31:0> | | | RW |

31       24 23       16 15       08 07       00

## Table 17: I/D CACHE 44 MISS COUNTer

DRAB base +

| 04 | | I/D CACHE MISS COUNT<31:0> | | | RW |

31       24 23       16 15       08 07       00

REGISTER DESCRIPTIONS

DRAB 38 SETUP REGISTER (SETUP) (R/W)

This register must be written with a LONGWORD operation on a LONGWORD boundary.

## Table 18: DRAB 38 SETUP Register bit definitions

```
DRAB base +
            3 3 2 2 2 2 2 2 2 2 2 2 1 1 1 1 1 1 1 1 1 1
            1 0 9 8 7 6 5 4 3 2 1 0 9 8 7 6 5 4 3 2 1 0 9 8 7 6 5 4 3 2 1 0
Power up default:
        |   0   |   C   |   0   |   7   |   0   |   0   |   3   |   C   |
        |0 0 0 0|1 1 0 0|0 0 0 0|0 1 1 1|0 0 0 0|0 0 0 0|0 0 1 1|1 1 0 0|
        +-+-+-+-+-+-+-+-+-+-+-+-+-+-+-+-+-+-+-+-+-+-+-+-+-+-+-+-+-+-+-+-+
    00  | | |   | | | REFR INTERVAL | |x| | | | | | | | | NBTO | | |
        +-+-+-+-+-+-+-+-+-+-+-+-+-+-+-+-+-+-+-+-+-+-+-+-+-+-+-+-+-+-+-+-+
         | | | | |   |               | | | | | | | | | | | | | |  | |
         | | | | `-- REFR_TYPE<1:0>   | | | | | | | | | | | | | |  | `--MEM_SIZE
         | | | `--NBURST             | | | | | | | | | | | | | |  `--DISABLE_ECC
         | | `--BANK_CONFIG          | | | | | | | | | | | `-- DIS_APAR_CHK
         | `------ KILL_ENABLE       | | | | | | | | | | `----- PROCESSOR 28_HI_PRI
                                     | | | | | | | | `-- IPAR DISABLE
                                     | | | | | | | `---- TEST MODE ENABLE
                                     | | | | | | `------ CACHE I ONLY (IONLY)
                                     | | | | | `-------- CACHE D ONLY (DONLY)
                                     | | | | `-- HOST PORT HI PRIORITY (HPHI)
                                     | | | `---- REFRESH COUNTY PRESET (RCP)
                                     | | `------ x
                                     | `-------- HOST PORT PRIORITY ENABLE (HPPE)
```

SETUP MEM_SIZE - Bit: <0> Type: RW

Selects the size of the memory, and is init to 0.

    0 - 1Meg x 4,
    1 - 4Meg x 4.

SETUP DISABLE_ECC - Bit: <1> Type: RW

ECC checking is disabled when this bit is set. Correct ECC is still generated and written to memory. It is initialized to 0.

SETUP NBTO<3:0> - Bits: <5:2> Type: RW

These bits determine the timeout value for a processor 28 to port processor 32 bus transaction. The timeout will occur when the TA or TEA signal is not asserted within the SETUP:NBTO time. The value determines the number of 160nS intervals from Transaction Start to expiration. It is initialized to 0F (1111).

SETUP DIS_APAR_CHK - Bit: <6> Type: RW

Address parity checking, i.e., address parity error detection, on memory accesses is disabled when this bit is set. It is initialized to 0.

SETUP PROCESSOR 28_HI_PRI - Bit: <7> Type: RW

Setting this bit to a ONE places the processor 28 memory requests above all others except host port. When set to a ZERO, the priority of processor 28 is equal to all NBUS 21 requesters. This bit is initialized to ZERO.

SETUP IPAR DISABLE - Bit: <8> Type: RW

Setting this bit to a ONE causes the DRAB 38 to ignore IBUS 19 parity errors. This bit is initialized to ZERO.

SETUP TEST MODE ENABLE - Bit: <9> Type: RW

Setting this bit to a ONE places the DRAB 38 in test vector mode. This delays assertion of the NBUS 21 control lines for 1/2 clock cycle to allow device test vectors to stimulate the NBUS 21 control logic. This bit is initialized to ZERO.

SETUP CACHE I ONLY - Bit: <10> Type: RW

This bit sets the ID CACHE control logic to cache instruction fetch memory cycles only. This bit is initialized to ZERO.

SETUP CACHE D ONLY - Bit: <11> Type: RW

This bit sets the ID CACHE control logic to cache data fetch memory cycles only. This bit is initialized to ZERO. If both CACHE D ONLY and CACHE I ONLY are both set or both reset (and the CACHE_ENABLE bit in the DRAB 38 Diagnostic CSR register is set), the ID cache will cache both instruction and data memory cycles.

SETUP HPHI - Bit: <12> Type: RW

The HOST PORT HIGH PRIORITY bit sets the arbitration priority for the host port. If this bit is set to a one, and HPPE is set, the host port will be the highest priority requester on the NBUS 21. This bit is initialized to ZERO.

SETUP RCP - Bit: <12> Type: W

Writing one to the REFRESH COUNT PRESET initializes the refresh counter to known value. This is a read only bit.

SETUP HPPE - Bit: <15> Type: RW

The HOST PORT PRIORITY ENABLE bit enables the HPHI bit. If this bit is set to one, the HPHI bit sets the arbitration priority for the host port requester on the NBUS 21. If this bit is a zero, the HPARBHI_L pin on DRAB 38 sets the host port priority. This bit is initialized to ZERO.

SETUP REFR_INTERVAL<7:0> - Bits: <23:16> Type: RW

Fixes refresh rate to be equal to (64OnS x REFR_INTERVAL + 32OnS).
Typical values are as follows.
For a 16mS refresh period for lmeg x 4 DRAM 98 or for a 64mS refresh period for 4Meg x 4

DRAM 98:

1 refresh/15.6uS -> REFR-INTERVAL=23

SETUP REFR-TYPE<1:0> - Bits: <25:24> Type: RW

These bit are initialized to Ras only refresh mode. They can be setup as defined below.

    00 - Ras only refresh mode,
    01 - Read scrubbing mode,
    10 - Refresh write - See NOTE,
    11 - Cas before Ras low power refresh mode.

NOTE: The '10' bit pattern initializes the memory array. The pattern written is the last pattern read. For example, to initialize memory with AAAAAAAA#16, write AAAAAAAA#16 to address X, then read address X. Next set the REFR_WRITE bit to initiate the memory pattern fill.

SETUP NBURST<2:0> - Bits: <28:26> Type: RW

These bits set the longword burst rate on the NBUS 21. They are initialized for a 4 longword burst. The bits are equal to the desired number of longwords/burst - 1. Examples follow:

    000 - 1 longword burst,
    011 - 4 longword burst,
    111 - 8 longword burst.

SETUP BANK_CONFIG<1:0> - Bits: <30:29> Type: RW

Selects number of banks of memory, and is init to 0.

    00, 11 - 1 bank,
    01 - 2 banks,
    10 - 4 banks.

SETUP KILL ENABLE - Bit: <31> Type: RW

The KILL line is a tristate line interconnecting two controller modules 10. The KILL line is pulled up on both controller modules 10A and 10B. When this bit is set, and CSR:KILL is reset, the DRAB 38 chip is enabled to drive the KILL line. While enabled, the DRAB 38 ignores values on the KILL line (cannot be killed itself).

Once this bit is set, and the CSR:KILL bit is reset, the KILL sequence is started. If the following processor 28 transaction is a write to the DRAB 38 CSR to set the KILL bit, the KILL line will be asserted, resetting the other controller module 10. The KILL line will be de-asserted when the KILL ENABLE bit is cleared.

If KILL ENABLE is set, and the next processor 28 bus transaction is not a write to set the CSR:KILL bit, the KILL ENABLE bit is reset.

DRAB 38 CONTROL and STATUS REGISTER (CSR) (R/W)

This register must be written with a LONGWORD operation on a LONGWORD boundary.

CSR WD-PERR<3:0> - Bits: <3:0> Type: RW

On any transaction on the MBUS 24 where a write data parity error has occurred, the corresponding bit for each byte in error is set. The ES bit is also set and an interrupt to the processor 28 occurs. The error address, data and region are saved in the EAR, EDR and ERR registers, respectively. Write 1 to clear.

## Table 19: DRAB 38 CSR Register bit definitions

CSR ID_PERR - Bit: <4> Type: RW

On any transaction on the IBUS 19 where a data parity error has occurred, this bit is set. This covers data transactions for the following regions as programmed in the DRAB 38 REGION SETUP REGISTER:

BUFFR, ITON, CACHEA, CACHEB, CAACSR. CABCSR

This bit is the ORed output of the individual byte parity errors on the IBUS 19 parity generators and checkers. No information is available as to which byte the parity error was found. The ES bit is also set and an interrupt to the processor 28 occurs. The error address, data and region are saved in the EAR, EDR and ERR registers, respectively. Write 1 to clear.

CSR CACHE_RW - Bits: <5> Type: RW

This bit is set when the ES bit is set on a transaction to the 'read cache'. The operator will know what type of 'read cache' transaction (read or write) was in process when any error which sets the ES bit occurred. This data will only be valid when the ES bit is set. Any value read when the ES bit is not set is not valid. The field is cleared when the error bit is written to clear.

CSR CACHE_BYTE_WRT - Bits: <6> Type: RW

This bit is set when the ES bit is set on a transaction to the 'read cache'. The operator will know that a 'read cache' byte write transaction was in process when any error which sets the ES bit occurred. This data will only be valid when the ES bit is set. Any value read when the ES bit is not set is not valid. The field is cleared when the error bit is written to clear.

CSR CACHE_CYCLE - Bits: <7> Type: RW

This bit is set when the ES bit is set on a transaction to the 'read cache'or 'wite-back cache'. The operator will

EP 0 632 379 B1

know that a 'read cache' transaction was in process when any error which sets the ES bit occurred. This data will only be valid when the ES bit is set. Any value read when the ES bit is not set is not valid. The field is cleared when the error bit is written to clear.

CSR BYTE_WRT - Bits: <8> Type: RW

This bit is set when the ES bit is set on a buffer memory transaction. The operator will know that a buffer memory byte write transaction was in process when any error which sets the ES bit occurred. This data will only be valid when the ES bit is set. Any value read when the ES bit is not set is not valid. The field is cleared when the error bit is written to clear.

CSR RW - Bits: <9> Type: RW

This bit is set when the ES bit is set on a transaction to the buffer memory. The operator will know what type of buffer memory transaction (read or write) was in process when any error which sets the ES bit occurred. This data will only be valid when the ES bit is set. Any value read when the ES bit is not set is not valid. The field is cleared when the error bit is written to clear.

CSR ARBWIN<2:0> - Bits: <12:10> Type: RW

These bits will hold the value of ARBWIN 168 when any error which sets the ES bit error occurs on an NBUS 21 transaction (IBUS 19_CYCLE=0). The operator will then know who the bus master was. This data will only be valid when the ES=I and IBUS 19_CYCLE=0. The field is cleared when the error bit is written to clear.

CSR IBUS 19_CYCLE - Bit: <13> Type: RW

This bit is set when the ES bit is set on an IBUS 19 transaction. The operator will know that an IBUS 19 transaction was in process when any error which sets the ES bit occurred. This data will only be valid when the ES bit is set. Any value read when the ES bit is not set is not valid. The field is cleared when the error bit is written to clear.

CSR ADDR_PERR - Bit: <14> Type: RW

When an address parity error has occurred on a DRAM 98 access, this bit is set. The ES bit is also set and an interrupt to the processor 28 occurs. The error address, data and region are saved in the EAR, EDR and ERR registers, respectively. Write 1 to clear.

CSR NXM - Bit: <15> Type: RW

This bit is set when nonexistent memory has been addressed. The ES bit is also set and an interrupt to the processor 28 occurs. The error address, data and region are saved in the EAR, EDR and ERR registers, respectively. Write 1 to clear.

CSR IN-BUSTO - Bit: <16> Type: RW

This bit is set on a bus timeout from an IBUS 19 to NBUS 21 transaction. The ES bit is also set and an interrupt to the processor 28 occurs. Write 1 to clear.

CSR MBIT_ERR - Bit: <17> Type: RW

When a multiple bit error on data read from DRAM 98 has occurred, this bit is set. The ES bit is also set and an interrupt to the processor 28 occurs. The error address, data and region are saved in the EAR, EDR and ERR registers, respectively. The DER register values are also captured. Write 1 to clear.

CSR SBIT_CRRCTN - Bit: <18> Type: RW

When a single bit correction to data read from one of DRAM's 98 has occurred, this bit is set. It does NOT cause the ES bit to be set, but if the DCR:SBIT_CR_MASK bit is set, will cause an interrupt to the processor 28. The DER register values are captured. Write 1 to clear this bit.

CSR MULT_SBC - Bit: <19> Type: RW

When a single bit correction to data read from one of DRAM's 98 has occurred more than once, this bit is set. It does NOT cause the ES bit to be set and does NOT generate and interrupt. The error does not change the error information in the DER which was captured for the first single bit error correction. Write 1 to clear this bit.

CSR SCRB_CYC_CMPLT - Bit: <20> Type: RW

When a scrubbing cycle of DRAM's 98 is complete, this bit is set. It does NOT cause the ES bit to be set. This is just update information that can be read at the operator's convenience. This bit should be checked to make sure refreshes to the DRAM 98 are continuing. Write 1 to clear the bit.

CSR NB_TEA - Bit: <21> Type: RW

When the DRAB 38 chip sees a TEA on the NBUS 21, this bit is set. It causes the ES bit to be set and an interrupt to the processor 28 occurs. Write 1 to clear.

CSR PORT PROCESSOR_ARB_DIS - Bit: <22> Type: RW

This bit is set when the ES bit is set from the errors described in the CSR. It will NOT be cleared when the initial error causing the ES bit to be set is cleared. It's function is to disable NBUS 21 transactions until the processor 28 can process the interrupt and assess the situation. Write 1 to clear and enable NBUS 21 transactions.

CSR IRESET - Bit: <23> Type: W

Writing a one to this bit will reset all the DRAB 38 internal state machines and internal error state registers. The internal reset lasts for 8 BCLK cycles. Writing a zero to this bit has no effect.

CSR CACHEA_NMI - Bit: <24> Type: RW

When an unrecoverable error on the Cache A board is detected, this bit is asserted in the Master CONTROLLER MODULE 10 DRAB 38. An NMI to the processor 28 occurs. The ES and PORT PROCESSOR_ARB_DIS bits are also set. Write 1 to clear the error on the Cache A DRAB 114 CSR first BEFORE writing 1 to clear this bit in the Master CONTROLLER MODULE 10 DRAB 38.

CSR CACHEB_NMI - Bit: <25> Type: RW

When an unrecoverable error on the Cache B board is detected, this bit is asserted in the Master CONTROLLER MODULE 10 DRAB 38. An NMI to the processor 28 occurs. The ES and PORT PROCESSOR_ARB_DIS bits are also set. Write 1 to clear the error on the Cache B DRAB 114 CSR first BEFORE writing 1 to clear this bit in the Master CONTROLLER MODULE 10 DRAB 38.

CSR CACHE_TIMEOUT - Bit: <26> Type: R/W1C

Timeout on CDAL bus 26 access to cache.

CSR KILL - Bits: <30> Type: RW

CSR ES - Bit: <31> Type: RW

This bit is a summary of most of the errors in the CSR register. It is set when the following CSR errors occur: WDAT_PERR, ID_PERR, ADDR_PERR, NXM, IN_BUSTO, MBIT_ERR, NB_TEA. When this bit is set, an interrupt to the processor 28 occurs.
NOTE: The interrupt is a Non-Maskable Interrupt when the error occurred during an IBUS 19 cycle. When the error occurred during an NBUS 21 cycle or a DRAM 98 refresh, a regular interrupt to the processor 28 is asserted.

DRAB 38 DIAGNOSTIC REGISTER (DCR) (R/W)

This register must be written with a LONGWORD operation on a LONGWORD boundary.

DCSR BG<7:0> - Bits: <7:0> Type: R

This field provides observability of the Bus grant lines.

```
     Table 20: DRAB 38 Diagnostic CSR
           Register bit definitions
   ───────────────────────────────────────────────────────

DRAB base +
      3 3 2 2 2 2 2 2 2 2 2 2 1 1 1 1 1 1 1 1 1 1
      1 0 9 8 7 6 5 4 3 2 1 0 9 8 7 6 5 4 3 2 1 0 9 8 7 6 5 4 3 2 1 0
      |   |   |   |   |   |   |   |     |       |       |       |
     +-+-+-+-+-+-+-+-+-+-+-+-+-+-+-+-+-+-+-+-+-+-+-+-+-+-+-+-+-+-+-+-+
 08  | | DIAG CKBITS |  FBPE | | | | |      BR<7:0>     |     BG<7:0>   |
     +-+-+-+-+-+-+-+-+-+-+-+-+-+-+-+-+-+-+-+-+-+-+-+-+-+-+-+-+-+-+-+-+
      |                         | | | |
      |                         | | | `--- BB test
      |                         | | `------ ARBTEST
      |                         | `-------- SBIT_CR_MASK
      |                         `--- CACHE_ENABLE
      `---- SUBS_CHKBITS
```

DCSR BR<7:0> - Bits: <15:8> Type: RW

This field provides observability of the Bus request lines, and when DCSR:ARBTEST is set, writes to this register provide the pattern applied to the arb logic.

DCSR BB TEST - Bit: <16> Type: RW

This bit provided observability of the NBUS 21 Bus Busy (BB_L) signal. When DSCR:ARBTEST is set, writes to this bit provide the value the arb logic sees for BB_L.

DCSR ARBTEST - Bit: <17> Type: RW

Setting this bit puts the DRAB 38 in ARBTEST mode. In this mode the NBUS 21 Bus request signals are not seen by the DRAB 38/NBUS 21 arbitration logic. The arbitration logic is stimulated by writes to the BR 166 and BB fields in this register. The resulting BG 164 signals can be observed by reading the BG field.
Care must be taken to hold the NBUS 21 masters reset during arbitration testing, as the Bus grant signals will be driven out of the DRAB 38.

DCSR SBIT_CR_MASK - Bit: <18> Type: RW

If a single bit error and correction to memory occurs (CSR:SBIT_CRRCTN = 1) when this bit is set, an interrupt to the processor will occur. This is to allow further investigation if multiple SBE's are happening in a short time period. If the bit is not set, then when CSR:SBIT_CRRCTN = 1, there will be no interrupt.

DCSR CACHE_ENABLE - Bit: <19> Type: RW

When this bit is set, cache is enabled. It is initialized to zero, i.e., cache disabled.

DCSR FBPE<3:0> - Bits: <23:20> Type: RW

Force Byte Parity Error. Each of these bits, when set will cause a corresponding byte parity error on a memory read. Bit 0 will cause a parity error in byte 0, etc.

DCSR DIAG_CHKBITS<6:0> - Bits: <30:24> Type: RW

These bits can be written with any value to be substituted into the normal checkbits in the ECC. They will be used for the normal checkbits when SUBS_CHKBITS is set. They are ignored if SUBS-CHKBITS is not set. These can be use to force single and multiple bit errors in the memory.

DCSR SUBS_CHKBITS - Bit: <31> Type: RW

When this bit is set the value in DIAG_CKBITS will be used for the checkbits in ECC. This can be used to force single and multiple bit errors in the memory.

DRAB 38 DRAM BUFFER 30 ERROR REGISTER (DER) ( R )

```
    Table 21: DRAB 38 Diagnostic Error            ·
         Register bit definitions
_____
DRAB base +                                           ·
       3 3 2 2 2 2 2 2 2 2 2 2 1 1 1 1 1 1 1 1 1 1
       1 0 9 8 7 6 5 4 3 2 1 0 9 8 7 6 5 4 3 2 1 0 9 8 7 6 5 4 3 2 1 0
       | |   |   |   |   |   |   |   |   |   |     |   |     |   |   |
    +-+-+-+-+-+-+-+-+-+-+-+-+-+-+-+-+-+-+-+-+-+-+-+-+-+-+-+-+-+-+-+
OC  |z|z|z|z|z|z|z|z|z|z|z|z|z|   | | SB_SYNDROME | | MB_SYNDROME |
    +-+-+-+-+-+-+-+-+-+-+-+-+-+-+-+-+-+-+-+-+-+-+-+-+-+-+-+-+-+-+-+
                                 | |               |
                                 | |               '--- M_REFR_IN_PROG
                                 | '--- S_REFR_IN_PROG
                                 '------ BNK_ERR_IDENT<1:0>
```

This register must be written with a LONGWORD operation on a LONGWORD boundary. It is initialized to zero.

DER MB_SYNDROME<6:0> - Bits: <6:0> Type: R

This field holds the syndrome value when a multiple bit error has occurred, and will only be valid when the CSR:MBIT_ERR bit is set. Any value read when the CSR:MBIT_ERR bit is not set is not valid.

DER M_REFR_IN_PROG - Bit: <7> Type: R

When set, this bit indicates there was a refresh in progress when a multiple bit error occurred. It will only be valid when the CSR:MBIT_ERR bit is set. Any value read when the CSR:MBIT_ERR bit is not set is not valid.

DER SB_SYNDROME<6:0> - Bits: <13:7> Type: R

This field holds the syndrome value when a single bit error and correction has occurred, and will only be valid when the CSR:SBIT_CRRCTN bit is set. Any value read when the CSR:SBIT_CRRCTN bit is not set is not valid.

DER S_REFR_IN_PROG - Bit: <15> Type: R

When set, this bit indicates there was a refresh in progress when a single bit error and correction occurred. It will only be valid when the CSR:SBIT_CRRCTN bit is set. Any value read when the CSR:SBIT_CRRCTN bit is not set is not valid.

DER BNK_ERR_IDENT<1:0> - Bits: <17:16> Type: R

This field identifies the DRAM 98 bank where a memory error occurred. The data will only be valid when the CSR:SBIT_CRRCTN bit is set. Any value read when the CSR:SBIT_CRRCTN bit is not set is not valid.

DRAB 38 ERROR ADDRESS REGISTER (EAR) ( R )

### Table 22: DRAB 38 Error Address Register bit definitions

```
DRAB base +
    3 3 2 2 2 2 2 2 2 2 2 2 1 1 1 1 1 1 1 1 1 1
    1 0 9 8 7 6 5 4 3 2 1 0 9 8 7 6 5 4 3 2 1 0 9 8 7 6 5 4 3 2 1 0
    |   |   |   |       |       |       |       |       |       |
    +-+-+-+-+-+-+-+-+-+-+-+-+-+-+-+-+-+-+-+-+-+-+-+-+-+-+-+-+-+-+
10 |0|0|0|0|                    ADDRESS                      |0|0|
    +-+-+-+-+-+-+-+-+-+-+-+-+-+-+-+-+-+-+-+-+-+-+-+-+-+-+-+-+-+-+
```

This register must be written with a LONGWORD operation on a LONGWORD boundary.

EAR ADDRESS<25:0> - Bits: <27:2> Type: R

This register will contain the address of the error which occurred to set the CSR:ES bit and interrupt the processor 28. It will contain the address of the first error if multiple error bits are set in the CSR. The address does not include the region or the byte values.

DRAB 38 ERROR DATA REGISTER (EDR) ( R )

### Table 23: DRAB 38 Error Data Register bit definitions

```
DRAB base +
    3 3 2 2 2 2 2 2 2 2 2 2 1 1 1 1 1 1 1 1 1 1
    1 0 9 8 7 6 5 4 3 2 1 0 9 8 7 6 5 4 3 2 1 0 9 8 7 6 5 4 3 2 1 0
    |   |       |       |       |       |       |       |       |
    +-+-+-+-+-+-+-+-+-+-+-+-+-+-+-+-+-+-+-+-+-+-+-+-+-+-+-+-+-+-+
14 |                              DATA                            |
    +-+-+-+-+-+-+-+-+-+-+-+-+-+-+-+-+-+-+-+-+-+-+-+-+-+-+-+-+-+-+
```

This register must be written with a LONGWORD operation on a LONGWORD boundary.

EDR DATA<31:0> - BIts: <31:0> Type: R

This register will contain the data of the error which occurred to set the CSR:ES bit and interrupt the processor 28. It will contain the data of the first error if multiple error bits are set in the CSR.

DRAB 38 ERROR REGION REGISTER (ERR) ( R )

This register must be written with a LONGWORD operation on a LONGWORD boundary.

EDR NADR_RGN<3:0> - Bits: <3:0> Type: R

This register will contain the upper four address bits of the NBUS 21 address when an error occurs (CSR:ES bit is set). If the CSR:IBUS 19_CYCLE bit is NOT set, then the transaction was on the NBUS 21 and this field is valid. If the CSR:IBUS 19_CYCLE bit IS set and the transaction was an IBUS 19 to NBUS 21, this field is valid. The field is not valid on just an IBUS 19 transaction error.

### Table 24: DRAB 38 Error Region
### Register bit definitions

```
DRAB base +
    3 3 2 2 2 2 2 2 2 2 2 2 1 1 1 1 1 1 1 1 1 1
    1 0 9 8 7 6 5 4 3 2 1 0 9 8 7 6 5 4 3 2 1 0 9 8 7 6 5 4 3 2 1 0
    |     |     |     |     |     |     |     |
    +-+-+-+-+-+-+-+-+-+-+-+-+-+-+-+-+-+-+-+-+-+-+-+-+-+-+-+-+-+-+-+-+
10  |x|x|x|x|x|x|x|x|x|x|x|x|x|x|x|x|x|x|x|x|x|x|     |     |     |
    +-+-+-+-+-+-+-+-+-+-+-+-+-+-+-+-+-+-+-+-+-+-+-+-+-+-+-+-+-+-+-+-+
                                                  |     |
                                                  |     |
                                                  |     '--- NADR_RGN
                                                  '----------- IADR_RGN
```

EDR IADR RGN<3:0> - Bite: <7:4> Type: R

This register will contain the upper four address bits of the IBUS 19 address when an error occurs (CSR:ES bit is set). If the CSR:IBUS 19_CYCLE bit IS set, then the error

### Table 25: DRAB 38 Region Setup
### Register bit definitions

```
DRAB base +
    3 3 2 2 2 2 2 2 2 2 2 2 1 1 1 1 1 1 1 1 1 1
    1 0 9 8 7 6 5 4 3 2 1 0 9 8 7 6 5 4 3 2 1 0 9 8 7 6 5 4 3 2 1 0
    |     |     |     |     |     |     |     |
    +-+-+-+-+-+-+-+-+-+-+-+-+-+-+-+-+-+-+-+-+-+-+-+-+-+-+-+-+-+-+-+-+
10  |x|x|x|x| CABCSR| CAACSR|x|x|x|x|CACHEB |CACHEA | ITON  | BUFFR |
    +-+-+-+-+-+-+-+-+-+-+-+-+-+-+-+-+-+-+-+-+-+-+-+-+-+-+-+-+-+-+-+-+
```

transaction was on the IBUS 19 and this field is valid.

DRAB 38 REGION SETUP REGISTER (RSR) ( RW )

This register must be written with a LONGWORD operation on a LONGWORD boundary. Due to the many region-to-region constraints, bus specific region constraints as well as module hardware constraints that must be adhered to when programming this register, the power-up default register value should generally be used.

SETUP BUFFER<3:0> - Bits: <3:0> Type: RW

These bits define the region to access buffer memory. They are the upper 4 bits of the address driven by the processor 28 bus devices - IADDR<31:28>. However, they are only 3 of the 4 upper bits of the address driven by the port processor 32 bus devices - NADDR<30:28>. NADDR<31> is used by the FX chip 54 for decoding RAID XOR functions. It is initialized to 2 (0010).

SETUP ITON<3:0> - Bits: <7:4> Type: RW

This is the upper 4 bit address region that the processor 28 uses to address the port processor 32 bus. It is initialized to 3 (0011).

SETUP CACHEA<3:0> - Bits: <11:8> Type: RW

These bits define the region to access CACHE A. They are the upper 4 bits of the address driven by the processor 28 bus devices - IADDR<31:28>. However, they are only 3 of the 4 upper bits of the address driven by the port processor 32 bus devices - NADDR<30:28>. NADDR<31> is used by the FX chip 54 for decoding RAID XOR functions. It is initialized to 4 (0100).

SETUP CACHEB<3:0> - Bits: <15:12> Type: RW

These bits define the region to access CACHE B. They are the upper 4 bits of the address driven by the processor 28 bus devices - IADDR<31:28>. However, they are only 3 of the 4 upper bits of the address driven by the port processor 32 bus devices - NADDR<30:28>. NADDR<31> is used by the FX chip 54 for decoding RAID XOR functions. It is initialized to 5 (0101).

SETUP CAACSR3:0> - Bits: <23:20> Type: RW

These bits define the region to access CACHE A CSR. They are the upper 4 bits of the address driven by the processor 28. Port processor 32 devices can not access CACHE CSRs. It is initialized to 8 (1000).

SETUP CABCSR<3:0> - Bits: <27:24> Type: RW

These bits define the region to access CACHE B CSR. They are the upper 4 bits of the address driven by the processor 28. Port processor 32 devices can not access CACHE CSRs. It is initialized to 9 (1001).

DRAB 38 I/D CACHE 44 HIT COUNTER (RSR) ( RW )

```
Table 26: DRAB 38 I/D HIT COUNTER
          definition
_____
DRAB base +
    3 3 2 2 2 2 2 2 2 2 2 2 1 1 1 1 1 1 1 1 1 1
    1 0 9 8 7 6 5 4 3 2 1 0 9 8 7 6 5 4 3 2 1 0 9 8 7 6 5 4 3 2 1 0
    I     I   I   I     I     I     I   I   I     I
    +-+-+-+-+-+-+-+-+-+-+-+-+-+-+-+-+-+-+-+-+-+-+-+-+-+-+-+-+-+-+-+
 20 I                   I/D HIT COUNT <31:0>                    I     .
    +-+-+-+-+-+-+-+-+-+-+-+-+-+-+-+-+-+-+-+-+-+-+-+-+-+-+-+-+-+-+-+
```

This register must be written with a LONGWORD operation on a LONGWORD boundary. It is initialized to zero.

IDH<31:0> - Bits: <31:0> Type: R

This is a 32 bit loadable counter which counts the number of I/D cache 44 bits for the type of information being cached (Code, Data or both) while the I/D cache 44 is enabled. Terminal count (FFFFFFFF) of either this counter or the I/D MISS COUNTer will cause both counters to freeze at their current value. In order to reset the I/D cache 44 counters after either has reached terminal count, this counter should be written with a reset value before the I/D MISS COUNTer is written.

DRAB 38 I/D CACHE 44 MISS COUNTER (RSR) ( RW )

```
Table 27: DRAB 38 I/D MISS COUNTER definition
_____
DRAB base +
    3 3 2 2 2 2 2 2 2 2 2 2 1 1 1 1 1 1 1 1 1 1
    1 0 9 8 7 6 5 4 3 2 1 0 9 8 7 6 5 4 3 2 1 0 9 8 7 6 5 4 3 2 1 0
    I     I   I     I     I     I     I   I   I     I
    +-+-+-+-+-+-+-+-+-+-+-+-+-+-+-+-+-+-+-+-+-+-+-+-+-+-+-+-+-+-+-+
 20 I                   I/D MISS COUNT <31:0>                   I
    +-+-+-+-+-+-+-+-+-+-+-+-+-+-+-+-+-+-+-+-+-+-+-+-+-+-+-+-+-+-+-+
```

This register must be written with a LONGWORD operation on a LONGWORD boundary. It is initialized to zero.

IDM<31:0> - Bits: <31:0> Type: R

This is a 32 bit loadable counter which counts the number of I/D cache 44 misses for the type of information being cached (Code, Data or both) while the I/D cache 44 is enabled. Terminal count (FFFFFFFF) of either this counter or the I/D HIT COUNTer will cause both counters to freeze at their current value. In order to reset the I/D cache 44 counters after either has reached terminal count, the I/D HIT COUNTer should be written with a reset value before this counter is written. Writing this register causes both counters to start counting again.

There are a total of three arbitration functions within the DRAB 38 chip. There is arbitration between IBUS 19 and the NBUS 21 for access to the DRAM buffer 30. There is arbitration between the IBUS 19 and the NBUS 21 for access to the read cache memory. And there is arbitration between the 6 SCSI ports, Host Port, FX chip 54 and the processor 28 for access to the NBUS 21 bus.

BUFFER MEMORY ARBITRATION

Priority of accesses to DRAM buffer 30 by the IBUS 19 and the NBUS 21 is equal. If both are requesting repeated access to the buffer memory, access will be granted to each alternately.

READ CACHE MEMORY ARBITRATION

The NBUS 21 requests have priority for access to read cache memory over the IBUS 19.

NBUS 21

NBUS 21 devices have the following priority:

```
Table 28:   NBUS 21
_____

        1 - Host port    (highest priority)
        2 - IBUS 19 to NBUS 21 accesses
+->     3 - SCSI port 1
|       4 - SCSI port 2
|       5 - SCSI port 3
|       6 - SCSI port 4
|       7 - SCSI port 5
|       8 - SCSI port 6
+->     9 - FX chip 54  (lowest priority)
```

Devices 3-9 always arbitrate in a round-robin fashion. Devices 1 and 2 can be individually programmed to participate in the round-robin. They can also be programmed to win via a simple priority and not participate in round-robin with the other requestors.

SLAVE/DATA CACHE mode

The DRAB 38 chip operates in both master and slave mode. Master mode is for Controller module 10 applications. The slave mode is for cache module 110 110. The SLAVE_H input sets the mode for the DRAB 38/114 chip. On controller modules 10, this pin is grounded, on cache modules 110, this pin is pulled to a logic "1".

The DRAB 38 chip controls the transfer of data over the backplane between controller module 10 and cache module or modules 110. The backplane interconnect is the CDAL bus 26. The CDAL bus 26 is a 32 bit multiplexed data and address bus with odd byte data parity. Each controller module 10 has a single CDAL bus 26 attached. Each cache module 110 has two CDAL busses 26A and 26B attached, one from each controller module 10A and 10B. Each controller module 10 has access to either of the two cache modules 110. Arbitration is provided by the slave DRAB 114A and 114B.

In the master mode, the controller module 10 DRAB 38 decodes IBUS 19 and NBUS 21 requests, and initiates CDAL bus 26 transfers on behalf of the controller module 10 bus master. The cache module 110 DRAB 114 receives the requests, performs the DRAM buffer 30 or CSR access requested and asserts an ACK or ERRor response.

DRAB 38 CDAL bus 26 control signals

CREQ_L<1:0> - CDAL bus 26 transfer request/address latch Driven by the controller module 10 DRAB 38 chip to initiate a CDAL bus 26 transfer. The line remains asserted during the transfer. At the end of the transfer, de-assertion of this signal terminates the transfer. There is one "req" for each cache module 110, from each controller module 10. The controller module 10 DRAB 38 decodes the region and asserts the proper request.

CACK_L<1:0> - CDAL bus 26 transfer ack

Driven by cache module 110 slave DRAB(s) 114. This signal is pulsed low once for each data longword transferred on the CDAL bus 26.

CERR_L<1:0> - CDAL bus 26 transfer error

Driven by cache module's 110 slave DRAB(s) 114. Received by the controller module 10 DRAB 38. Cache module 110 CDAL bus 26 error, and cache module 110 mem error signal. One error signal from each of the two cache modules 110. This signal is asserted with the CACK_L signal to indicate an error has been detected by the cache module 110 DRAB chip 114. The controller module 10 DRAB 38 then performs the proper error response sequence for the NBUS 21 and/or IBUS 19 master.

## Table 29: BASIC CDAL bus 26 transfer

Other CDAL bus 26 control signals

The following signals are required on the backplane between the controller module 10 and cache modules (s) 110.

C_PRESENT_A and C_PRESENT_B

Backplane lines from each cache module 110 to each controller module 10. These lines are pulled up on each controller module 10. IF a cache module 110 is inserted in cache slot A, C_PRESENT_A is pulled down, indicating presence of the cache module 110 in the system to each controller module 10. These lines are received by the controller module 10 diagnostic read registers 80,82.

C_LOCK <1:0> - Cache lock signals

Driven by the controller module's 10 DIAG control register as a cache module 110 lock signal. A controller module 10 can "lock" a cache module 110 for its exclusive use. Assertion of the C_LOCK signal will inhibit a cache module 110 DRAB 114 from responding to a CREQ from any other controller module 10 CDAL bus 26 master. A controller module 10 attempts to take ownership of a cache module 110 by asserting this line. If a subsequent transfer receives ACK, the lock is in place until this line is de-asserted. If the transfer times out, the cache module 110 is either locked to the "other" controller module 10 or not functional.
If no C_LOCK signals are asserted to a cache module 110, it will respond to either controller module 10 master.

INTERFACE SPECIFICATION

The following information describes the electrical and timing interface requirements for the DRAB 38 chip.

DRAB 38 PIN DESCRIPTIONS

Table 30:

| MBUS 24 and DRAM 98 INTERFACE SIGNAL PINS | | | | |
|---|---|---|---|---|
| Signal | Type | #pins | Total | Description |
| MDAL ⟨31:00⟩H | I/O | 32 | 32 | MEMORY DATA/ADDRESS BUS |
| MDP ⟨3:0⟩H | I/O | 4 | 36 | DATA PARITY |
| MECC ⟨6:0⟩H | I/O | 7 | 43 | ECC check bits |
| RAS ⟨3:0⟩L | O | 4 | 47 | Row Address Strobe |
| CAS ⟨3:0⟩L | O | 4 | 51 | Column Address Strobe |
| DADDR ⟨11:0⟩L | O | 12 | 63 | DRAM Address Lines |
| WE L | O | 1 | 64 | Write Enable |
| BCLK H | I | 1 | 65 | Bus Clock |

MDAL <31:0> H - Memory Data/Address Lines; 32 Pins; I/O

The MBUS 24 is a data/address multiplexed memory bus. The DRAM buffer 30 data pins, DRAB 38, and the bus exchanger 100 chips tie directly to this bus.

DP <3:0> - NBUS 21 Data Parity Lines; 4 Pins; I/O

Odd byte parity lines for the MBUS 24.

NBUS 21 Port Interface Signal Pins

The following device signal pins attach to the NBUS 21 Port control signals.

Table 31

| NBUS 21 Port Signal Pins | | | | |
|---|---|---|---|---|
| Signal | Type | #pins | Total | Description |
| SIZ ⟨1:0⟩ H | I/O | 2 | 67 | NBUS 21 Transfer SIZe |
| NADDR ⟨31:28⟩ H | I | 4 | 71 | NBUS 21 Region Address |
| TS L | I/O | 1 | 72 | NBUS 21 Transfer Start |
| TIP L | I/O | 1 | 73 | NBUS 21 Transfer in Progress |
| RW L | I/O | 1 | 74 | NBUS 21 Read/Write L control |
| TA L | I/O | 1 | 75 | NBUS 21 Transfer Acknowledge |
| BB L | I/O | 1 | 76 | NBUS 21 Bus Busy |
| BR ⟨7:0⟩ L | I | 8 | 84 | NBUS 21 Bus Reqs./Cache Sel. |
| BG ⟨7:0⟩ L | O | 8 | 92 | NBUS 21 Bus Grant |
| ARBWIN ⟨2:0⟩ H | O | 3 | 95 | NBUS 21 Bus Master |

SIZ <3:0> H - NBUS 24 SIZe Lines; 2 Pins; I/O

Indicate the length of a bus transaction. The FX chip 54 only accepts LONGWORD slave accesses (SIZ=00) and performs only BURST DMA transfers (SIZ=11). All bus transfers with SIZ other than 00 and 11 are ignored.

TS L - NBUS 24 Transfer Start Line; 1 Pin; I/O

NBUS 24 TS/ Line. This line indicates that a transfer is starting and valid address and control lines are asserted on the bus.

TIP L - NBUS 24 Transfer in Progress Line; 1 Pin; I/O

NBUS 24 TIP/ Line.

BR <7:0> H - NBUS 24 Bus Request/Cache Request; 2 Pins; I/O

In controller mode, these lines are the inputs to the arbitration logic.
In cache mode, BR<0> and BR<1> serve as the two requests for access to cache memory behind the DRAB chip.

Processor 28 Port Interface Signal Pins

Table 32

| Processor 28 Port Signal Pins | | | | |
|---|---|---|---|---|
| Signal | Type | #pins | Total | Description |
| BE ⟨3:0⟩ H | I | 4 | 99 | byte enable lines |
| BLAST L | I | 1 | 100 | Burst Last Signal |
| DEN L | I | 1 | 101 | data enable |
| ADS L | I | 1 | 102 | Address Strobe |
| IRQ L | O | 1 | 103 | Interrupt Req. |
| READY L | O | 1 | 104 | Ready Signal |
| DC L | I | 1 | 105 | Data/Code Signal |
| IADDR ⟨31:28⟩ L | I | 4 | 109 | Region Address |
| MATCHA H | I | 1 | 110 | I/D Cache 44 Hit Bank A |
| MATCHB H | I | 1 | 111 | I/D Cache 44 Hit Bank B |
| LRUW L | O | 1 | 112 | I/D Cache LRW Write Line |

Cache Bus Interface Signal Pins

Table 33

| Cache Bus Interface Signal Pins | | | | |
|---|---|---|---|---|
| Signal | Type | #pins | Total | Description |
| CRW L | I/O | 1 | 113 | Cache Bus Read/Write Cntrl |
| CREQ ⟨1:0⟩ L | I/O | 2 | 115 | Cache Access Request |
| CACK ⟨1:0⟩ L | I/O | 2 | 117 | Cache Access Acknowledge |
| CERR ⟨1:0⟩ L | I/O | 2 | 119 | Cache Error Acknowledge |

CREQ L - Cache Bus Access Request; 2 Pins; I/O

In controller module 10 master mode, this pin is an output only. This pin is asserted to start a transfer to a cache module 110. Just prior to asserting this signal, the cache address is placed on the CDAL bus 26 lines along with C_RW L.
In cache module 110 slave mode, this pin is an input only. It receives the transfer request from the master controller module 10.
CACK L - Cache Bus Access Acknowledge; 2 Pins; I/O
In controller module 10 master mode, these pins are inputs only. The acknowledge handshake is received through this pin.
In cache module 110 slave mode, this pin is an output only, and drives the acknowledge handshake signal.

Miscellaneous interface signal pins.

Table 34

| Miscellaneous Interface Signal Pins | | | | |
|---|---|---|---|---|
| Signal | Type | #pins | Total | Description |
| MODE L | I | 1 | 119 | Cache Slave/Cntrlr Master |
| MEMRW L | I | 1 | 120 | FX chip 54 R/W Cntrl pin |
| XCVR ⟨3:0⟩ H | O | 4 | 124 | Bus Transceiver Control |
| LOCK L | O | 1 | 125 | Buffer Memory LOCK |
| CS L | I | 1 | 126 | DRAB 38 Chip Select |
| RESET L | I | 1 | 127 | Master Chip Reset |

CS L - DRAB 38 Chip Select; 1 Pin; I

The DRAB 38 internal registers can be read and written by the processor 28. Assertion of this chip select pin tells the DRAB 38 chip it is the target of a processor 28 transaction. The DRAB 38 chip performs the requested transaction and asserts READY L.

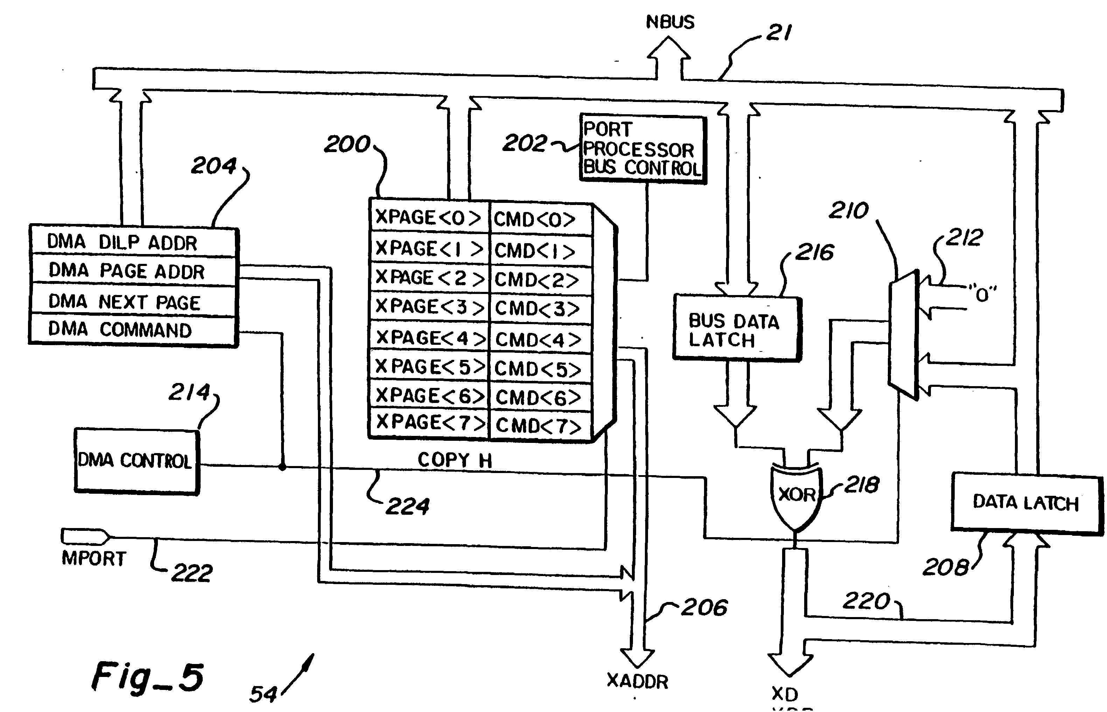

Referring additionally now to Fig. 5, a functional logic block diagram of the FX chip 54 is shown. All internal registers of FX chip 54 are accessed through the NBUS 21. FX chip 54 comprises a command and XPAGE ("PCX") registers 200 under control of port processor bus control logic 202 and three bits on MPORT lines 222.

DMA registers 204 are also coupled to NBUS 21 providing a DMA indirect list pointer ("DILP") address register, a DMA page address register, DMA next page register and a DMA command register. DMA registers 204 in conjunction with PCX registers 200 provides an address ("XADDR") address on XADDR bus 206. DMA registers 204 are controlled by DMA control logic 214 which also supplies an input to multiplexer 210.

NBUS 21 is coupled through bus data latch 216 to one input of an XOR logic function 218 having its other input coupled to the output of multiplexer 210 has as its input a logical "zero" input 212 as well as the output of XOR logic function 218 appearing on bus 220 through data latch 208. Bus 220 provides 32 bits of XORed data and four bits of XORed data parity.

```
Table 35:  CMD-XPAGE REGISTER MAP (PCXn)

      +---------------+---------------------+---------------+-----+-----+
  00| ZEROS    |     PORT O XPAGE    |     ZEROS     | CMD | RW
      +---------------+---------------------+---------------+-----+-----+
  04| ZEROS    |     PORT O XPAGE    |     ZEROS     | CMD | RW
      +---------------+---------------------+---------------+-----+-----+
  08| ZEROS    |     PORT O XPAGE    |     ZEROS     | CMD | RW
      +---------------+---------------------+---------------+-----+-----+
  0C| ZEROS    |     PORT O XPAGE    |     ZEROS     | CMD | RW
      +---------------+---------------------+---------------+-----+-----+
  10| ZEROS    |     PORT O XPAGE    |     ZEROS     | CMD | RW
      +---------------+---------------------+---------------+-----+-----+
  14| ZEROS    |     PORT O XPAGE    |     ZEROS     | CMD | RW
      +---------------+---------------------+---------------+-----+-----+
  18| ZEROS    |     PORT O XPAGE    |     ZEROS     | CMD | RW
      +---------------+---------------------+---------------+-----+-----+
  1C| ZEROS    |     PORT O XPAGE    |     ZEROS     | CMD | RW
      +---------------+---------------------+---------------+-----+-----+
       31     24 23           16 15            08 07          00
```

FX Chip 54 CSR register

```
Table 36:  FX Chip 54 Control/Status Register (CSR)
_____

FX base +
        +--------------+--------------+--------------+--------------+
   20   |                    Control and Status                    | RW
        +--------------+--------------+--------------+--------------+
          31            24 23          16 15          08 07          00
```

DMA engine registers

```
Table 37:  DMA Address registers (DADDR)
_____

FX base +
        +-------------------+----------+------+---+
   30   | DMA Indirect List Page Address | List offset|0|0| RW
        +-------------------+----------+------+---+
          31                 24 23      16 15       08 07     00

        +-------------------+----------+------+---+
   34   |   BUFFER PAGE ADDRESS   |  DMA XPAGE  | R
        +-------------------+----------+------+---+
          31                 24 23      16 15       08 07     00
```

```
Table 38:  DMA command/Control register (DCMD)
_____

FX base +
        +--------+-----------------+-------------+
   38   |  CMD   |  DMA INDEX COUNT |  DMA PAGE COUNT | RW
        +--------+-----------------+-------------+
          31       24 23   16 15                  08 07   00
```

REGISTER DESCRIPTIONS

FX CHIP 54 PORT COMMAND and XPAGE REGISTERS (PCX) (R/W)

```
Table 39: FX CHIP 54 PORT COMMAND and XPAGE
          Register bit definitions

FX base + 00 through 1C, or FX base + 24 + ARBWIN
3 3 2 2 2 2 2 2 2 2 2 2 1 1 1 1 1 1 1 1 1 1
1 0 9 8 7 6 5 4 3 2 1 0 9 8 7 6 5 4 3 2 1 0 9 8 7 6 5 4 3 2 1 0
+-+-+-+-+-+-+-+-+-+-+-+-+     +-+-+-+-+-+-+-+-+
|X|X|X|X|X|X|X|X|X|X|X|X|   XPAGE    .|X|X|X|X|X|X|0| CMD|
+-+-+-+-+-+-+-+-+-+-+-+-+     +-+-+-+-+-+-+-+-+
                                           '-XOR COMMAND
                                        '--Compare Clear
                     '--XBUF 102 PAGE ADDRESS
```

The FX chip 54 performs on the fly XOR for up to eight bus masters. There is one PCX register for each bus master. The currently selected bus master is communicated to the FX chip 54 through the three ARBWIN 168 signal pins. The decoded ARBWIN 168 value selects the corresponding PCX register.

The X field can be written with any value, written values are returned on read.

PCX CMD - Bits<1:0> Type: RW

CMD<0> controls read-XOR-write operation. If this bit is SET, DATA transfers cause read-XOR-write operations to XBUF 102 to occur.

CMD<1> controls the buffer memory Read/Write line. When this bit is set, buffer memory Read operations become XBUF 102 read operations with simultaneous buffer Write operations. This allows the FX chip 54 to transfer computed XOR blocks to a PORT while at the same time copying them to buffer memory, at the address specified by the port.

If both CMD<0> & CMD<1> bits are set, data from the XBUF 102 will be transferred to a PORT and buffer memory as described above. In addition, since the XOR bit is also set, an XOR of XBUF 102 data with itself, or "0", is written back to the XBUF 102 location being accessed. This serves to clear the XBUF 102 page in preparation for another operation. CMD<2> Controls the calculation of a running 'OR' for buffer compare operations. If this bit is set, a running 'OR' of all bit XOR results, is calculated. If this bit is reset, the running 'OR' is disabled, but the OTF Buffer Compare flags are not cleared. If CMD = 100#2, On-The-Fly XOR operations will occur but XBUF 102 will not be updated. CMD = 101#2 will cause the Read-XOR-Write operations to occur, with running 'OR' for buffer compare. The resulting XBUF 102 data will be a bit map to all differences between the data buffers.

If XBUF 102 slave address space is written by the port controller, and NADDR<31> = 1 (XOR operations enabled), The location referenced by the port is not updated. This allows for port OTF Buffer Compare operations which do not involve Buffer memory. These transfers complete faster than buffer memory references. A zerofill operation does NOT put the read data addressed by the PCX register on the NBUS 21; it only zero's the address in XRAM.

If CMD = 0, no operation occurs. The XBUF 102 memory is not modified.

PCX COMPARE CLEAR - Bit<3> Type R/W1C

Writing 1 to this bit location clears the corresponding OTF buffer compare result bit in the FX chip 54 CSR register. On PCX register read from the SCSI port, this bit reflects the same status as the CSR OTF buffer compare result bit.

On a processor 28 read of any PCX register besides the PCXO, the COMPARE CLEAR bit will not reflect the correct status. The correct status of each PCX OTF buffer compare can be found only in the CSR for processor 28 accesses. The port processor 32 read of its corresponding PCX register will reflect the correct status in the COMPARE CLEAR bit.

PCX XPAGE address - Bits<18:9> Type: RW

This value is used as the page address into the XBUF 102 memory for read-XOR-write operations.

FX CHIP 54 CONTROL and STATUS REGISTER (CSR) (R/W)

This register must be written with a LONGWORD operation on a LONGWORD boundary.

CSR CHIP REVISION - Bit<2:0> Type: R

This field is reserved to hold the chip revision number.

NBUS 21 PARITY CHECK DISABLE - Bit<3> Type: R

This bit, when set, disables parity checking on the NBUS 21 for slave writes to the PCX registers of the XBUF 102. When set this bit inhibits the NBUSPORT logic from asserting the parity error signal. This allows data with bad parity to be written to FX chip 54 registers or the XBUF 102 memory.

## Table 40: FX Chip 54 CSR Register bit definitions

```
Initialized to:

 0 0 0 0 0 0 0 0 0 0 0 0 0 0 0 0 0 0 0 0 0 0 0 0 0 0 0 0 0 0 1 0

FX base +

 3 3 2 2 2 2 2 2 2 2 2 2 1 1 1 1 1 1 1 1 1 1
 1 0 9 8 7 6 5 4 3 2 1 0 9 8 7 6 5 4 3 2 1 0 9 8 7 6 5 4 3 2 1 0
 +-+-+-+-+-+-+-+-+-+-+-+-+       +-+-+-+-+ +-+-+ +-+-+
 | | | | | | | | | | | | |TIMEOUT| | | | | |PORT | |REV |
 +-+-+-+-+-+-+-+-+-+-+-+-+       +-+-+-+-+ +-+-+ +-+-+
  | | | | | | | | | | | |                 | | | | |   |   '--CHIP REVISION
  | | | | | | | | | | | |                 | | | | |   '--NBUS 21 PARITY CHECK
  | | | | | | | | | | | |                 | | | | |        DISABLE
  | | | | | | | | | | | |                 | | | | '----ERROR PORT #
  | | | | | | | | | | | |                 | | | '----ERROR SUMMARY
  | | | | | | | | | | | |                 | | '------XBUF 102 SLAVE PARITY ERROR
  | | | | | | | | | | | |                 | '--------NBUS 21 SLAVE PARITY ERROR
  | | | | | | | | | | | |                 '----------NBUS 21 TIMEOUT ERROR
  | | | | | | | | | | | '------------------------XBUF 102 PARITY ERROR
  | | | | | | | | | | '--------------------------NBUS 21 MASTER PARITY ERROR
  | | | | | | | | | '-----------------------------NBUS 21 TIMEOUT VALUE
  | | | | | | | | '------------------------------DMA BUFFER COMPARE
  | | | | | | | '-------------------------------DMA ACTIVE
  | | | | | | '--------------------------------DMA COMPLETE
  | | | | | '-------------------------------INTR
  | | | | '--------------------------------INTR ENABLE
  | | | | '---------------------------------OTF BUFFER COMPARE 0
  | | | '----------------------------------OTF BUFFER COMPARE 1
  | | '-----------------------------------OTF BUFFER COMPARE 2
  | '------------------------------------OTF BUFFER COMPARE 3
  | '-------------------------------------OTF BUFFER COMPARE 4
  | '--------------------------------------OTF BUFFER COMPARE 5
  '---------------------------------------OTF BUFFER COMPARE 6
  '----------------------------------------OTF BUFFER COMPARE 7
```

CRS ERROR PORT - Bit<6:4> Type: R

When an error is detected, the number of the controller module 10 NBUS 21 master at the time of the error is latched in this field.

The value in this field is valid only when the ERROR SUMMARY bit is SET.

CSR ERROR SUMMARY - Bit<7> Type: R

This bit offers a quick summary of chip error status. This bit is the logical OR of all error bits. This bit reflects the state of the ERR_L pin. This signal can be used to inhibit the NBUS 21 arbitration logic, allowing the processor 28 control processor to access the chip before error state is lost.

CSR XBUF 102 SLAVE PARITY ERROR - Bit<8> Type: W1C

When the FX chip 54 XBUF 102 port logic detects a parity error on XBUF 102 slave read operations, this bit is asserted.

This bit is cleared when WRITTEN to one.

CRS NBUS 21 PARITY ERROR - Bit<9> Type: W1C

When the FX chip 54 NBUS 21 port logic detects a parity error on FX chip 54 slave register writes, or XBUF 102 memory slave writes this bit is asserted.

This bit is cleared when WRITTEN to one.

CSR NBUS 21 TIMEOUT ERROR - Bit<10> Type: W1C

This bit is asserted when a DMA transfer initiated by FX chip 54 does not receive a transfer ack response from memory within the timeout period. This could be the result of a bad memory address, or hardware failure. By setting this bit, and ending the bus cycle, we allow the processor 28 access to collect error status.

This bit is cleared when WRITTEN to one.

CSR XBUF 102 MASTER PARITY ERROR - Bit<11> Type: W1C

When the FX chip 54 XBUF 102 port logic detects a parity error on XBUF 102 read while FX chip [ 54 is the NBUS 21 master (DMA operations), this bit is asserted.
This bit is cleared when WRITTEN to one.

CSR NBUS 21 MASTER PARITY ERROR - Bit<12> Type: W1C

When the FX chip 54 NBUS 21 port logic detects a parity error on NBUS 21 read operations, while the FX chip 54 is the NBUS 21 master (DMA operations), this bit is asserted.
This bit is cleared when WRITTEN to one.

CSR NBUS 21 TIMEOUT VALUE - Bit<18:13> Type: RW

This field specifies the NBUS 21 DMA transaction timeout value. This value sets the NBUS 21 timeout period. Each time the FX chip 54 starts a master mode NBUS 21 operation (DMA), the transaction timeout counter is loaded with this value. The transaction timeout counter is down counted at 1/4 the BCLK rate. If the counter reaches zero before a transaction acknowledge is received, The NBUS 21 TIMEOUT ERROR bit is set.
This field is initialized to zero which means there will be no DMA timeout check by the FX chip 54. This field needs to be initialized to a non-zero value in order for a DMA NBUS 21 timeout to occur.

DMA BUFFER COMPARE - Bit<19> Type: W1C

This bit indicates the result of a DMA buffer compare operation. A BUFFER COMPARE operation is nothing more than a DMA XOR operation where the running "OR" of all the bits output from the XOR engine is computed. The result of this running "OR" is reflected in this register bit. This bit is SET when a non-zero result is computed. When SET, the BUFFER COMPARE DMA is terminated. The state or the DMA PAGE ADDRESS register, and DMA INDEX REGISTER will point to the location of the difference. The IRQ_L pin is also asserted.
This bit is cleared when WRITTEN to one, or when a new buffer compare DMA is started.

CSR DMA ACTIVE STATUS - Bit<20> Type: R

When this bit is set it indicates the FX chip 54 internal DMA engine is currently busy. When asserted, the DMA COMMAND and DILP registers must not be written.

CSR DMA COMPLETE STATUS - Bit<21> Type: W1C

When this bit is set it indicates the FX chip 54 internal DMA engine has completed a DMA operation. This bit is not asserted when an error occurs during a DMA operation. DMA Complete will be asserted when a DMA buffer compare operation terminates, even if the termination is a result of a buffer miscompare.
This bit is cleared when WRITTEN to one.

CSR INTR STATUS - Bit<22> Type: W1C

This bit reflects the state of the IRQ_L pin. When SET, an interrupt request is being asserted to the processor 28.
The FX chip 54 generates an interrupt, if enabled, when any of the ERROR bits in this register are set, and on DMA completion status.
This bit is cleared when the error causing the interrupt is cleared. This will also reset the interrupt request to the processor 28.

CSR INTR ENABLE - Bit<23> Type: RW

Setting this bit enables the IRQ_L line to the processor 28. If reset, the IRQ_L line is always reset. This bit also disables the INTR STATUS bit from being set on an error.

OTF BUFFER COMPARE - Bits<31:24> Type: R

These bits indicate the result of On-The-Fly (OTF) buffer compare operations. An OTF buffer compare operation is initiated when a PCX register is written with a Buffer Compare command. The port interface chip (port processors 32,34) then performs a normal data transfer to or from buffer memory. The FX chip 54 computes a running 'OR' of all bit results from an On-The-Fly XOR of the data transferred, and the XBUF 102 XPAGE specified in the PCX register. If SET following an OTF Buffer Compare operation, a difference was detected.

Bits in this field are read only status bits. Control/reset is contained in the associated PCX register.

FX CHIP 54 DMA INDIRECT LIST POINTER REGISTER (DILP) (R/W)

### Table 41: DMA Indirect List Pointer register (DILP)

```
FX base +

      3 3 2 2 2 2 2 2 2 2 2 2 1 1 1 1 1 1 1 1 1 1
      1 0 9 8 7 6 5 4 3 2 1 0 9 8 7 6 5 4 3 2 1 0 9 8 7 6 5 4 3 2 1 0
      | | | | | | |     |     |     |     |     |
      +-+-+-+-+-+-+-+-+-+-+-+-+-+-+-+-+-+-+-+-+-+-+-+-+-+-+-+-+-+-+-+-+
   30 |        DMA Indirect List Page address      | List offset |0|0| RW
      +-+-+-+-+-+-+-+-+-+-+-+-+-+-+-+-+-+-+-+-+-+-+-+-+-+-+-+-+-+-+-+-+
```

DMA Indirect List Page address - Bits:<31:9> type: RW

The value in this field specifies the page address from which the list of DMA page address values will be read.

List Offset - Bits:<8:2> Type: RW

This list offset can be written with an initial offset into the DMA Indirect List Page address. Following every page address value fetch, this value is incremented to point to the next LONGWORD in the list. All address values written to the DILP register must be LONGWORD aligned values. The list cannot cross page boundaries. The List Offset does NOT generate a carry into the List Page Address field. If a page crossing occurs, the List Offset will roll over to 0's. No error will be flagged.

FX CHIP 54 DMA BPAGE and XPAGE ADDRESS REGISTER (DADDR) (R)

### Table 42: FX CHIP 54 DMA PAGE ADDRESS Register bit definitions

```
FX base +

      3 3 2 2 2 2 2 2 2 2 2 2 1 1 1 1 1 1 1 1 1 1
      1 0 9 8 7 6 5 4 3 2 1 0 9 8 7 6 5 4 3 2 1 0 9 8 7 6 5 4 3 2 1 0
      | | | | | | |     |     |     |     |   |
      +-+-+-+-+-+-+-+-+-+-+-+-+-+-+-+-+-+-+-+-+-+-+-+-+-+-+-+-+-+-+-+-+
   34 |       BUFFER PAGE ADDRESS             |     DMA XPAGE     |R
      +-+-+-+-+-+-+-+-+-+-+-+-+-+-+-+-+-+-+-+-+-+-+-+-+-+-+-+-+-+-+-+-+
```

DMA XPAGE - Bits:<9:0> Type: R

This field holds the current DMA XBUF 102 page address value.

DMA BUFFER PAGE - Bits:<31:10> Type: R

This field holds the current DMA BUFFER PAGE address value, bits 30:9. Table 43, FX CHIP 54 DMA PAGE ADDRESS shows the mapping if the page address fields to the NBUS 21 and XBUF 102 addresses.

## Table 43: FX CHIP 54 DMA PAGE ADDRESS

NBUS 21 buffer memory DMA address:

```
3 3 2 2 2 2 2 2 2 2 2 2 1 1 1 1 1 1 1 1 1 1
1 0 9 8 7 6 5 4 3 2 1 0 9 8 7 6 5 4 3 2 1 0 9 8 7 6 5 4 3 2 1 0
+-+-+-+-+-+-+-+-+-+-+-+-+-+-+-+-+-+-+-+-+-+-+-+-+-+-+-+-+-+-+-+
|0|       BUFFER PAGE ADDRESS              |    DMA XPAGE   |0|0|
+-+-+-+-+-+-+-+-+-+-+-+-+-+-+-+-+-+-+-+-+-+-+-+-+-+-+-+-+-+-+-+
```

XBUF 102 DMA address:

```
                                  1 1 1 1 1 1 1 1
                                  8 7 6 5 4 3 2 1 0 9 8 7 6 5 4 3 2 1 0
                                  +-+-+-+-+-+-+-+-+-+-+-+-+-+-+-+-+-+-+-+
                                  | XBUF PAGE ADDRESS |   DMA INDEX  |0|0|
                                  +-+-+-+-+-+-+-+-+-+-+-+-+-+-+-+-+-+-+-+
```

These registers are not read/writable registers. They are created on a start of a DMA. NOTE that the actual Buffer Page Address is a one-bit right shift of the address that the operator loads into Buffer Memory (at the indirect DILP address).

FX CHIP 54 DMA COMMAND REGISTER (DCMD) (R/W)

## Table 44: DMA Command/Control register (DCMD)

Writing this register with a non-zero DMA command initiates the DMA operation. The DILP register must have already been written with the starting address of the page list in buffer memory.

DCMD LAST PAGE OFFSET - Bits:<8:2> Type: RW

The value in this field sets the offset into the final page of a DMA operation at which the operation completes. The index written here will be the last longword of the DMA. If the DMA page count is ZERO, indicating final page, This value is compared against the DMA PAGE INDEX COUNTER value. If equal the DMA terminates.

DCMD DMA PAGE COUNT - Bits:<15:9> Type: RW

This field is written with the number of pages the DMA operation is to span. This number is decremented when the DMA is started, and again the start of each page. A value of ONE will cause the DMA operation to be restricted to a single page, TWO will transfer data from two pages etc. When the value is ZERO, the final page is being worked on. [0267]    This register will not decrement past ZERO. If ZERO is written to this field, the DMA will span only a single page, exactly the same as if a value of ONE were written.

DCMD DMA INDEX COUNT - Bits:<24:18> Type: RW

This field offers read access to the DMA engine's page INDEX counter. This value can be read for diagnostic testing, and to determine the index into a page where a buffer compare operation found a difference.
DMA operations can begin at non-page aligned locations. Writing a non-zero value into this field will set an initial page offset into the first page of the DMA operation.

DCMD CMD - Bits:<31:28> Type: RW

The CMD field determines the type of operation to be performed.

Table 45

| DMA CMD Value | | |
|---|---|---|
| CMD | Transfer Type | Description |
| 0000 | None | No operation, DMA does not start |
| 0001 | Read | Copy Command, DMA from buffer memory |
| 0010 | Write | Copy Command DMA to buffer memory |
| 0011 | Read | XOR Command, DMA from buffer memory XOR with XBUF 102 page, result written back to XBUF 102 |
| 0100 | Read | BUFFER COMPARE Command, DMA from buffer memory XOR with XBUF 102 page |
| 1000 | Read | ZERO Command, Performs NBUS 21 READ, ZEROs XBUF 102 page |
| Note: The BUFFER COMPARE command does not write the resulting XOR back to XBUF 102. ZERO command NBUS 21 READ operations can address XBUF 102 space. This removes buffer memory cycle overhead from the transaction. | | |

ON-THE-FLY XOR

To set up for XOR buffer generation, a single write to an FX Chip 54 PCXn register is required. Setting PCXn: CMD<0> will enable the XOR engine. Subsequent controller module 10 device bus 62 DATA transactions from a like numbered bus master will initiate Read-XOR-Write operations into XBUF.DATA transactions are all transfers in which NADDR<31> = 1. All Buffer Memory address space is thus double mapped. NADDR <31> is used to qualify all PCX commands. In the case of SCSI write operations the port processors 32 will write their PCXn register after target selection, but before it starts the write DATA DMA operations.

In the case of SCSI disk read operations, with reselection, the port processor 32 writes its PCX register when reselected, before read DATA DMA operations occur.

The FX chip 54 does not keep track of page index count, the port processors 32 provide the complete buffer address. Thus the FX chip 54 does not keep track of completion of buffer transfers. The only interrupt to the processor 28 from the FX chip 54 while performing on-the-fly XOR operations is in the event of error detection.

The FX chip 54 can perform XBUF 102 read, buffer write, and XBUF 102 clear in a single memory access cycle. Setting the PCXn:CMD<0> is also set, an XOR of the XBUF 102 data with itself will be written back to the XBUF 102 location, thus clearing the location.

If PCXn:CMD = 011#2, and a reference is made to XBUF 102 address space, no memory write operation will occur.

DMA OPERATIONS

The FX chip 54 has a single DMA engine. The engine reads buffer pointers from a list in buffer memory. The location of the list is defined by the value written into the FX chip 54's DMA Indirect List Pointer register. Once the DMA command register (DCMD) is written, the DMA engine performs a single LONGWORD "fetch" of the first pointer in the list.

To allow for multi-page DMA operations, a method for chaining DMA's together is provided. When the page index counter rolls over (page crossing), and the DMA PAGE COUNT has not reached zero, a single LONGWORD DMA "fetch" operation is initiated. The buffer memory location pointed to by the DMA DILP register will be fetched and copied into the DMA Page Address register. Once the DMA PAGE COUNT has reached zero, no further DMA "fetch" operations are registered. Once the DMA LAST PAGE OFFSET is equal to the DMA INDEX COUNT (both found in the DCMD register), no further DMA's are requested.

DMA operations can start on any LONGWORD boundary. The DMA INDEX COUNT field in the DCMD register can be written with an initial LONGWORD offset into the first page. DMA operations can stop on any LONGWORD offset into the last page.

**EP 0 632 379 B1**

ZERO FILL OPERATION

The XBUF 102 can be zeroed, or cleared, by initiating a DMZ or a PCX operation. To zerofill XBUF 102 with a DMA, a '1000' command is written into the DCMD register after the correct addresses have been set up in the DILP and Buffer Memory. The address can select Buffer Memory or XBUF 102. XBUF 102 addressed operations complete faster. CSR DMA COMPLETE will be asserted when the zerofill finishes.

To zerofill XBUF 102 with a PCX operation, a PCX command of '011' is written to the PCX register. This will clear the XBUF 102 memory pointed to by the XBUF 102 Page Address (the index is taken from the NBUS 21 address).

DMA COPY OPERATION

A command of '0001' written to the DCMD register will initiate a copy from Buffer Memory to XBUF 102. A command of '0010' will initiate a copy from XBUF 102 to Buffer Memory. CSR DMA COMPLETE will be asserted when the DMA copy finishes.

BUFFER COMPARE OPERATION

A Buffer Compare can be initiated by either a DMA or a PCX operation. A DMA command of '0100' will compare data at the Buffer Memory and XBUF 102 addresses set up in the DILP indirect pointer. On a compare difference, CSR BUFFER COMPARE is asserted and IRQ_L is asserted.

A PCX command of '100' will compare XBUF 102 data with the data currently on the NBUS 21 (through an NBUS 21 read or write). A command of '101' will do the compare plus it will also write the bit differences through to the XBUF 102. On a compare difference, PCX COMPARE CLEAR and CSR OTF BUFFER COMPARE(x) are set.

NBUS 21 PORT INTERFACE SIGNAL PINS

The following device signal pins attach to the buffered port processor 32 bus (NBUS 21) port. The bus is Address/Data multiplexed.

Table 46:

| NBUS 21 PORT SIGNAL PINS | | | | |
|---|---|---|---|---|
| Signal Type | #pins | total | Description | |
| DAL<31:00> | HIO | 32 | 32 | NBUS Data/Address Bus |
| DP<3:0> H | IO | 4 | 36 | NBUS Data Parity |
| SIZ<1:0> H | IO | 2 | 38 | NBUS Transfer SIZe |
| TS L | IO | 1 | 39 | NBUS Transfer Start |
| TIP L | IO | 1 | 40 | NBUS Transfer In Progress |
| RW L | IO | 1 | 41 | NBUS Read/WriteL Control |
| TA L | IO | 1 | 42 | NBUS Transfer Acknowledge |
| TEA L | IO | 1 | 43 | NBUS Transfer Error Acknowledge |
| BB L | IO | 1 | 44 | NBUS Bus Busy |
| CS L | I | 1 | 45 | NBUS Slave Chip Select |
| XCS L | I | 1 | 46 | NBUS XBUF Chip Select |
| BCLK H | I | 1 | 47 | NBUS Bus Clock |
| BREQ L | O | 1 | 48 | NBUS Bus Request |
| BGRT L | I | 1 | 49 | NBUS Bus Grant |
| MEMWR L | | O | 1 | 50 Read/WriteL Signal to Buffer Memory |
| ARBWIN<2:0> H | I | 3 | 53 | NBUS BUS Master Port |

DAL<31:0> H - NBUS 21 DATA/ADDRESS LINES; 32 PINS; I/O;
    Multiplexed 710 bus Data/Address pins.
DP<3:0> H - NBUS 21 DATA PARITY LINES; 4 PINS; I/O;
    Odd byte data parity lines from the 710 bus.
SIZ<1:0> H - NBUS 21 SIZe LINES; 2 PINS; I/O;
    Indicate the length of a bus transaction. The FX chip 54 only accepts LONGWORD slave accesses (SIZ=00),

and performs only BURST DMA transfers (SIZ=11). All bus transfers with SIZ other than 00 and 11 are ignored.

TS L - NBUS 21 TRANSFER START LINE; 1 PINS; I/O;

Buffered port processor 32 bus TS/ line. This line indicates that a transfer is starting and valid address and control lines are asserted on the bus.

TIP L - NBUS 21 TRANSFER IN PROGRESS LINE; 1 PINS; I/O;

Port processor 32 bus TIP/ line.

TA L - NBUS 21 TRANSFER ACKNOWLEDGE; #1 PINS; I/O;

Port processor 32 bus TA/ line.

TEA L - NBUS 21 TRANSFER ERROR ACKNOWLEDGE LINE; 1 PINS; I/O;

Port processor 32 bus TEA/ line.

CS L - NBUS 21 SLAVE CHIP SELECT; 1 PINS; I;

Slave register access chip select input.

XCS L - NBUS 21 XBUF 102 SLAVE CHIP SELECT; 1 PINS; I;

Chip select for XBUF 102 access.

MEMWR L - BUFFER MEMORY READ/WRITE LINE; 1 PIN; OUT;

The FX chip 54 buffers the port processor 32 buses' Read/Write line to buffer memory. This allows the FX chip 54 to write buffer memory on the same transfer as an XBUF 102 location is read.

ARBWIN<2:0> H - NBUS 21 MASTER PORT; 3 PINS; I/O;

The current winner of arbitration for NBUS 21 master.

XBUF 102 PORT INTERFACE SIGNAL PINS

The following device signal pins attach to the XBUF 102 fast static ram devices.

Table 47

| XBUF 102 PORT SIGNAL PINS | | | | |
|---|---|---|---|---|
| Signal | Type | #pins | total | Description |
| XD⟨31:00⟩H | IO | 32 | 82 | XBUF Data Bus |
| XDP⟨3:0⟩ H | IO | 4 | 86 | XBUF Data Parity |
| XADDR⟨18:02⟩ H | O | 17 | 103 | XBUF Address |
| XADDR_INV ⟨18:17⟩ H | O | 2 | 105 | XBUF Address Inverted |
| XWE L | O | 1 | 106 | XBUF Write Enable |
| XOE L | O | 1 | 107 | XBUF Output Enable |

XD<31:0> - XBUF 102 DATA LINES; 32 PINS; I/O;

These lines tie to the XBUF 102 RAM's data pins.

XDP<3:0> - XBUF 102 DATA PARITY LINES; 4 PINS; I/O;

These lines tie to the XBUF 102 RAM's parity data pins. Odd byte parity is stored with all XBUF 102 data. Odd byte parity is checked on all XBUF 102 read operations.

XADDR<18:2> - XBUF 102 ADDRESS LINES; 17 PINS; OUT;

XPAGE is divided into 512 byte pages. These lines drive the address value to the XBUF 102 RAM chips. For 32K x 9 devices, only XADDR<16:2> pins may be used or 128K x 9 devices, XADDR<18:7> pins can be provided.

XADDR_INV<18:17> - XBUF 102 ADDRESS INVERTED LINES; 2 PINS; OUT;

The lines are provided for expansion to extra 32K x 9 devices instead of 128K x 9's.

XWE - XBUF 102 WRITE ENABLE; 1 PINS; OUT;

This line drive the XBUF 102 RAM's Write Enable (WE_L) line.

XOE<1:0> - XBUF 102 OUTPUT ENABLE LINES; 2 PINS; OUT; The XOE line drive the XBUF 102 RAM's Output enable (OE_L) line.

Using 32K x 9 SRAM devices the FX chip 54 can drive 2 or 4 sub-banks; 128Kbyte (256 Pages) or 265Kbytes (512 Pages) of XBUF 102. Using 128K x 9 SRAM devices the FX chip 54 can drive up to 1Mbyte or 2048 pages of XBUF 102.

PORT PROCESSOR 28 INTERFACE SIGNAL PINS

Table 48

| PORT PROCESSOR 28 INTERFACE SIGNAL PINS | | | | |
|---|---|---|---|---|
| Signal | Type | #pins | total | Description |
| ERR L | O | 1 | 108 | ERROR Summary output |
| IRQ L | O | 1 | 109 | Interrupt request to processor 28 |
| RESET L | I | 1 | 110 | Master Chip reset |
| TESTMODE H | I | 1 | 111 | Used for internal testing purposes |
| IVOUT H | O | 1 | 112 | Used for internal testing purposes |

Table 49

| JTAG SIGNAL PINS | | | | |
|---|---|---|---|---|
| Signal | Type | #pins | total | Description |
| TDO H | O | 1 | 113 | Test Data Output |
| TDI H | I | 1 | 114 | Test Data Input |
| TCK H | I | 1 | 115 | Test Clock |
| TMS H | I | 1 | 116 | Test Mode Signal |

NBUS 21 PARITY ERRORS

The NBUS 21 has ODD Byte data parity. The FX CHIP 54 checks data parity on all NBUS 21 data transfers.

XBUF 102 PARITY ERRORS

The XBUF 102 port does check parity of outgoing XBUF 102 write data. A parity error will be flagged in the CSR if bad parity is written. This parity check can be disabled by setting the NBUS 21 Parity Check Disable bit in the CSR.

During XOR type operations, the FX chip 54 must calculate XBUF 102 byte parity. The XBUF 102 port computes ODD byte parity on all XOR type operations.

Parity is checked on all XBUF 102 read operations. This is required since parity is recalculated on all XOR type operations.

INTERNAL PARITY

On XBUF 102 read operations parity is passed through the FX chip 54. If there is a parity error on read operations, a bit will be flagged in the CSR, and the data with the bad parity will go out on the NBUS 21.

While there have been described above, the principles of the present invention in conjunction with specific apparatus, it is to be clearly understood that the foregoing description is made only by way of example and not as a limitation to the scope of the invention.

**Claims**

1. A computer mass storage device controller system comprising:

first and second controller modules (10A, 10B) for operative coupling to a plurality of computer mass storage devices ($120_0$-$120_5$), said first controller module for controlling a first subset of said plurality of computer mass storage devices and said second controller module for controlling a second subset of said plurality of computer mass storage devices;

a communications medium interconnecting said first and second controller modules, **characterised by** said communications medium for conveying an indication signal showing a controller presence, from one of said controller modules to the other of said controller modules when said one of said controller modules is included in said system, said communications medium including a plurality of controller module communications lines (19, 21, 26) for communications between said first and second controller modules when said controller present indication is detected by both said first and second controller modules, said communications lines including a controller module disable line for assertion by either said controller modules to operatively disable said other of said controller modules in response to a malfunction indication from said other of said controller modules; means (38) for enabling said first controller module operatively to disable a malfunctioning second controller module by asserting said controller module disable line; and

means (38) for said first controller to assume access to and control of said second subset of said plurality of computer mass storage devices.

2. The computer mass storage device controller system of claim 1 further comprising:

first and second data cache modules (110A, 110B) operatively coupled to said first and second controller modules (10A, 10B) by respective first data paths (26A, 26B), said first and second data cache modules further having alternative second data paths (88A, 88B) for operatively coupling said first and second controller modules to said second and first data cache modules respectively,

wherein said first controller module is further operatively coupled to said second data cache module by said second data path upon assuming control of said second subset of said plurality of computer mass storage devices.

3. The computer mass storage device controller system of claim 1 wherein said communications medium comprises a backplane (36) into which said first and second controller modules (10A, 10B) are electrically coupled, and communications between said first and second controller modules on said communications medium are conducted asynchronously.

4. The computer mass storage device controller system of claim 3 wherein said communications medium further comprises first and second clear-to-send signal lines.

5. The computer mass storage device controller system of claim 1 wherein said other of said controller modules (10A, 10B) is precluded from functionally disabling said one of said controller modules once said one of said controller modules has disabled said other of said controller modules.

6. The computer mass storage device controller system of claim 1 wherein said communications medium includes an asynchronous communications channel (19), comprising first and second unidirectional communications lines.

7. The computer mass storage device controller system of claim 1 wherein said plurality of controller module communications lines (19, 21, 26) convey configuration and operational information between said first and second controller modules (10A, 10B).

8. The computer mass storage device controller system of claim 1 further comprising means (48) to send a message to said second controller that said first controller is booting.

9. The computer mass storage device controller system of claim 1 further comprising means (38) to prevent each controller module when properly functioning from disturbing contents of mass storage devices corresponding to the other controller module when properly functioning.

10. The computer mass storage device controller system of claim 1 further comprising said plurality of computer mass storage devices ($120_0$-$120_5$) including said first and second subsets thereof.


**Patentansprüche**

1. Computer-Massenspeichervorrichtungs-Steuersystem umfassend:

ein erstes und ein zweites Steuermodul (10A, 10B) zum operativen Ankoppeln an mehrere Computer-Massenspeichervorrichtungen ($120_0$ bis $120_5$), wobei das erste Steuermodul eine erste Untergruppe der mehreren Computer-Massenspeichervorrichtungen steuert und das zweite Steuermodul eine zweite Untergruppe der mehreren Computer-Massenspeichervorrichtungen steuert;

ein Kommunikationsmedium, welches das erste und das zweite Steuermodul miteinander verbindet, **dadurch gekennzeichnet, dass** das Kommunikationsmedium ein Anzeigesignal, welches ein Vorhandensein eines Steuergeräts anzeigt, von einem Steuermodul zum anderen Steuermodul überträgt, wenn das eine Steuermodul in das System eingeschlossen wird, wobei das Kommunikationsmedium mehrere Steuermodul-Kommunikationsleitungen (19, 21, 26) zur Kommunikation zwischen dem ersten und dem zweiten Steuermodul einschließt, wenn die Anzeige des Vorhandenseins der Steuergeräte sowohl vom ersten als auch vom zweiten Steuermodul erfasst wird, wobei die Kommunikationsleitungen eine Steuermodul-Deaktivierungsleitung zum logisch wahr Setzen durch ein Steuermodul einschließen, um das andere Steuermodul als Reaktion auf eine Fehlfunktionsanzeige vom anderen Steuermodul operativ zu deaktivieren;

Mittel (38) zum operativen Aktivieren des ersten Steuermoduls, um ein fehlfunktionierendes zweites Steuermodul durch logisch wahr Setzen der Steuermodul-Deaktivierungsleitung zu deaktivieren; und

Mittel (38) für die erste Steuerung, um einen Zugriff auf die zweite Untergruppe der mehreren Computer-Massenspeichervorrichtungen und ihre Steuerung zu übernehmen.

2.  Computer-Massenspeichervorrichtungs-Steuersystem nach Anspruch 1, weiterhin umfassend:

ein erstes und ein zweites Daten-Cache-Modul (110A, 110B), welche operativ an das erste und das zweite Steuermodul (10A, 10B) durch jeweilige erste Datenwege (26A, 26B) angekoppelt sind, wobei das erste und das zweite Daten-Cache-Modul weiterhin alternative zweite Datenwege (88A, 88B) zum operativen Ankoppeln des ersten und des zweiten Steuermoduls an das zweite bzw. an das erste Daten-Cache-Modul aufweisen,

wobei das erste Steuermodul weiterhin beim Übernehmen der Steuerung der zweiten Untergruppe der mehreren Computer-Massenspeichervorrichtungen operativ durch den zweiten Datenweg an das zweite Daten-Cache-Modul angekoppelt ist.

3.  Computer-Massenspeichervorrichtungs-Steuersystem nach Anspruch 1, wobei das Kommunikationsmedium eine Rückwandplatine (36) umfasst, an welcher das erste und das zweite Steuermodul (10A, 10B) elektrisch angekoppelt sind, und eine Kommunikation zwischen dem ersten und dem zweiten Steuermodul auf dem Kommunikationsmedium asynchron ausgeführt wird.

4.  Computer-Massenspeichervorrichtungs-Steuersystem nach Anspruch 3, wobei das Kommunikationsmedium weiterhin eine erste und eine zweite Signalleitung zur Sendeauslösung umfasst.

5.  Computer-Massenspeichervorrichtungs-Steuersystem nach Anspruch 1, wobei das andere der Steuermodule (10A, 10B) vom funktionellen Deaktivieren des einen Steuermoduls ausgeschlossen ist, wenn einmal das eine Steuermodul das andere Steuermodul deaktiviert hat.

6.  Computer-Massenspeichervorrichtungs-Steuersystem nach Anspruch 1, wobei das Kommunikationsmedium einen asynchronen Kommunikationskanal (19) einschließt, welcher eine erste und eine zweite unidirektionale Kommunikationsleitung umfasst.

7.  Computer-Massenspeichervorrichtungs-Steuersystem nach Anspruch 1, wobei die mehreren Steuermodul-Kommunikationsleitungen (19, 21, 26) Konfigurations- und Betriebsinformationen zwischen dem ersten und dem zweiten Steuermodul (10A, 10B) übertragen.

8.  Computer-Massenspeichervorrichtungs-Steuersystem nach Anspruch 1, weiterhin umfassend Mittel (48) zum Senden einer Nachricht an das zweite Steuergerät, dass das erste Steuergerät gerade hochfährt.

9.  Computer-Massenspeichervorrichtungs-Steuersystem nach Anspruch 1, weiterhin umfassend Mittel (38) zum Verhindern, dass jedes Steuermodul, wenn es richtig funktioniert, Inhalte von Massenspeichervorrichtungen stört, welche zum anderen Steuermodul gehören, wenn es richtig funktioniert.

10. Computer-Massenspeichervorrichtungs-Steuersystem nach Anspruch 1, weiterhin umfassend die mehreren Com-

puter-Massenspeichervorrichtungen ($120_0$ bis $120_5$) einschließlich ihrer ersten und ihrer zweiten Untergruppe.

**Revendications**

1. Système de contrôleurs à unités de mémoire de masse informatiques, comprenant :

   des premier et second modules contrôleurs (10A, 10B) destinés à être couplés en fonctionnement à une pluralité d'unités de mémoire de masse informatiques ($120_0$-$120_5$), ledit premier module contrôleur étant destiné à contrôler un premier sous-ensemble de ladite pluralité d'unités de mémoire de masse informatiques, et ledit second module contrôleur étant destiné à contrôler un second sous-ensemble de ladite pluralité d'unités de mémoire de masse informatiques ;
   un moyen de communications interconnectant lesdits premier et second modules contrôleurs, **caractérisé en ce que** ledit moyen de communications est destiné à transmettre un signal d'indication indiquant la présence de contrôleur, entre l'un desdits modules contrôleurs et l'autres desdits modules contrôleurs lorsque ledit un desdits modules contrôleurs est inclus dans ledit système, ledit moyen de communications comprenant une pluralité de lignes de communications de modules contrôleurs (19, 21, 26) pour des communications entre lesdits premier et second modules contrôleurs lorsque ladite indication de présence de contrôleur est détectée à la fois par lesdits premier et second modules contrôleur, lesdites lignes de communications comprenant une ligne de désactivation de module contrôleur destinée à être utilisée par l'un desdits modules contrôleurs pour désactiver le fonctionnement dudit autre desdits modules contrôleurs, en réponse à une indication de dysfonctionnement issue dudit autre desdits modules contrôleurs ;
   des moyens (38) pour permettre audit premier module contrôleur, en fonctionnement, de désactiver un second module contrôleur défectueux en utilisant ladite ligne de désactivation de module contrôleur ; et
   des moyens (38) pour permettre audit premier contrôleur d'accéder à et de contrôler le second sous-ensemble de ladite pluralité d'unités de mémoire de masse informatiques.

2. Système de contrôleurs à unités de mémoire de masse informatiques selon la revendication 1, comprenant en outre :

   des premier et second modules caches de données (110A, 110B) couplés en fonctionnement aux dits premier et second modules contrôleurs (10A, 10B) par des premiers chemins de données respectifs (26A, 26B), lesdits premier et second modules caches de données possédant également des seconds chemins de données alternatifs (88A, 88B) destinés à coupler en fonctionnement lesdits premier et second modules contrôleurs aux dits second et premier modules caches de données, respectivement,

   dans lequel ledit premier module contrôleur est également couplé en fonctionnement audit second module cache de données par ledit second chemin de données lorsqu'il prend le contrôle dudit second sous-ensemble de ladite pluralité d'unités de mémoire de masse informatiques.

3. Système de contrôleurs à unités de mémoire de masse informatiques selon la revendication 1, dans lequel ledit moyen de communications comprend un fond de panier (36) auquel lesdits premier et second modules contrôleurs (10A, 10B) sont couplés électriquement, et les communications entre lesdits premier et second modules contrôleurs sur ledit moyen de communications sont exécutées de façon asynchrone.

4. Système de contrôleurs à unités de mémoire de masse informatiques selon la revendication 3, dans lequel ledit moyen de communications comprend en outre des première et seconde lignes de signaux « prêt à émettre ».

5. Système de contrôleurs à unités de mémoire de masse informatiques selon la revendication 1, dans lequel l'autre desdits modules contrôleurs (10A, 10B) est empêché de désactiver le fonctionnement dudit un desdits modules contrôleurs une fois que ledit un desdits modules contrôleurs a désactivé ledit autre desdits modules contrôleurs.

6. Système de contrôleurs à unités de mémoire de masse informatiques selon la revendication 1, dans lequel ledit moyen de communications comprend une voie de communications asynchrone (19), comprenant des première et seconde lignes de communications unidirectionnelles.

7. Système de contrôleurs à unités de mémoire de masse informatiques selon la revendication 1, dans lequel ladite pluralité de lignes de communications de modules contrôleurs (19, 21, 26) acheminent des informations de configuration et de fonctionnement entre lesdits premier et second modules contrôleurs (10A, 10B).

8. Système de contrôleurs à unités de mémoire de masse informatiques selon la revendication 1, comprenant des moyens (48) pour envoyer un message au dit second contrôleur que ledit premier contrôleur est en train d'amorcer.

9. Système de contrôleurs à unités de mémoire de masse informatiques selon la revendication 1 comprenant en outre des moyens (38) pour empêcher chaque module contrôleur, s'il fonctionne correctement, de perturber le contenu des unités de mémoire de masse correspondant à l'autre module contrôleur, s'il fonctionne correctement.

10. Système de contrôleurs à unités de mémoire de masse informatiques selon la revendication 1, comprenant en outre ladite pluralité de mémoires de masse informatiques ($120_0$, $120_5$), y compris les premier et second sous-ensembles de celles-ci.

Fig_1

EP 0 632 379 B1

EP 0 632 379 B1

Fig_2

52

Fig_3

Fig_4

Fig_5

NBUS

21

PORT PROCESSOR BUS CONTROL — 202

200

204

| | |
|---|---|
| XPAGE<O> | CMD<O> |
| XPAGE<I> | CMD<I> |
| XPAGE<2> | CMD<2> |
| XPAGE<3> | CMD<3> |
| XPAGE<4> | CMD<4> |
| XPAGE<5> | CMD<5> |
| XPAGE<6> | CMD<6> |
| XPAGE<7> | CMD<7> |

DMA DILP ADDR
DMA PAGE ADDR
DMA NEXT PAGE
DMA COMMAND

214

DMA CONTROL

COPY H

224

MPORT

222

206

XADDR

210

212

"O"

216

BUS DATA LATCH

218

XOR

DATA LATCH

208

220

XD

54

EP 0 632 379 B1

Fig_6a — Register 84

| Bits | 31 | 30–29 | 24–23 | 18–17 | 16 | 15–0 |
|------|-----|-------|-------|-------|-----|------|
| Field | RESERVED | (6) -LEDS <5:0> | SCSI <6:1> SNOOP CLEAR | RESERVED | RESET CIRT | RESERVED |

Fig_6b — Register 86

| Bits | 31–26 | 25 | 24 | 23–20 | 19 | 18 | 17 | 16 | 15–10 | 9 | 8 | 7–3 | 2 | 1 | 0 |
|------|-------|-----|-----|-------|-----|-----|-----|-----|-------|-----|-----|-----|-----|-----|-----|
| Field | -SCSI <6:1> RESET | -HOST PORT RESET | FX RESET | -IBUS PAR ODD <3:0> | | BUTTON CLR | -COMM RESET | TIMER GATE | SCSI <6:1> FAULT DATA | FAULT ENA | FAULT CLK | RESERVED | -TAG RESET | LOCK SEC CACHE | LOCK PRI CACHE |

Fig_7a — Register 80

| Bits | 31 | 30 | 29 | 28 | 27 | 26 | 25 | 24 | 23–18 | 17 | 16 | 15–10 | 9 | 8 | 7–2 | 1 | 0 |
|------|-----|-----|-----|-----|-----|-----|-----|-----|-------|-----|-----|-------|-----|-----|-----|-----|-----|
| Field | POWER OK | CODE STORE ALARM | CODE STORE CARD PRSNT | CODE STORE WRT PROT | MAN INIT | -BATT FAIL | S6 SHELF OK | S5 SHELF OK | BUS QUIESCE REQUEST <6:1> | S4 SHELF OK | S3 SHELF OK | -SCSI PORT SNOOP INTERRUPT <6:1> | S2 SHELF OK | S1 SHELF OK | -SCSI <6:1> IRQ | PRI CACHE LOCKED | SEC CACHE LOCKED |

Fig_7b — Register 82

| Bits | 31–16 | 15–10 | 9 | 8 | 7 6 | 5–4 | 3 | 2 1 | 0 |
|------|-------|-------|-----|-----|-----|-----|-----|-----|-----|
| Field | RESERVED | SCSI 6:1 SWAP | -COMM INTERRUPT | -TIMER INTERRUPT | -CACHE EVENT INTERRUPT A \| B | RESERVED | -OTHER FIB IN | -PRI / -SEC CACHE IN | SLOT |

EP 0 632 379 B1